(19) **Europäisches Patentamt European Patent Office Office européen des brevets**

(11) **EP 3 777 242 B1**

(12) **EUROPEAN PATENT SPECIFICATION**

(45) Date of publication and mention
of the grant of the patent:
**11.10.2023 Bulletin 2023/41**

(51) International Patent Classification (IPC):
*H04S 5/00* (2006.01)   *H04S 7/00* (2006.01)
*H04S 3/02* (2006.01)   *H04R 3/12* (2006.01)
*G06F 3/16* (2006.01)   *G10L 19/008* (2013.01)

(21) Application number: **19776342.8**

(22) Date of filing: **12.03.2019**

(52) Cooperative Patent Classification (CPC):
**H04R 3/12; G06F 3/165; H04S 7/302;** G10L 19/008;
H04S 2400/11; H04S 2420/03; H04S 2420/11

(86) International application number:
**PCT/FI2019/050206**

(87) International publication number:
**WO 2019/185979 (03.10.2019 Gazette 2019/40)**

(54) **SPATIAL SOUND RENDERING**

RÄUMLICHE SCHALLWIEDERGABE

RESTITUTION SPATIALE DE SONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2018 GB 201805215**

(43) Date of publication of application:
**17.02.2021 Bulletin 2021/07**

(73) Proprietor: **Nokia Technologies Oy**
**02610 Espoo (FI)**

(72) Inventors:
• **ERONEN, Antti Johannes**
**33820 Tampere (FI)**
• **LAITINEN, Mikko-Ville**
**00210 Helsinki (FI)**
• **VILKAMO, Juha Tapio**
**00120 Helsinki (FI)**
• **PIHLAJAKUJA, Tapani**
**01300 Vantaa (FI)**

(74) Representative: **Nokia EPO representatives**
**Nokia Technologies Oy**
**Karakaari 7**
**02610 Espoo (FI)**

US-A1- 2014 226 823   US-B2- 9 042 565

• **Pulkki ET AL: "Applications of directional audio
coding in audio", 19th International Congress on
Acoustics 2-7 September 2007, 2 September 2007
(2007-09-02), pages 1-6, XP055642353, Madrid
Retrieved from the Internet:
URL:https://pdfs.semanticscholar.org/a009/
235ffe1ad17d1889d047e6d8b2d7168a0e55.pdf
[retrieved on 2019-11-14]**
• **ZOTTER FRANZ ET AL: "All-Round Ambisonic
Panning and Decoding", JAES, AES, 60 EAST
42ND STREET, ROOM 2520 NEW YORK
10165-2520, USA, vol. 60, no. 10, 1 October 2012
(2012-10-01), pages 807-820, XP040574863,**
• **BOEHM, J.: "Decoding for 3D", AES 130th
Convention, 13 May 2011 (2011-05-13), pages
1-16, XP040567441, Retrieved from the Internet:
URL:http://www.aes.org/e-lib/browse.cfm?el
ib=15893 [retrieved on 2019-05-21]**
• **PULKKI, V.: "Virtual Sound Source Positioning
Using Vector Base Amplitude Panning", In:
Journal of Audio Engineering Society. AES, vol.
45, no. 6 1 June 1997 (1997-06-01), pages 456-466,
XP002719359, Retrieved from the Internet:
URL:http://www.aes.org/e-lib/browse.cfm?el
ib=7853 [retrieved on 2019-05-31]**

(56) References cited:
**EP-A1- 3 297 298   WO-A1-2015/184307**

• PULKKI, V.: "Applications of directional audio coding in audio. In: 19th International Congress on Acoustics 2007", 19th International Congress on Acoustics 2-7 September 2007, 2 September 2007 (2007-09-02), pages 1-6, XP055642353, Madrid Retrieved from the Internet: URL:https://pdfs.semanticscholar.org/a009/235ffe1ad17d1889d047e6d8b2d7168a0e55.pdf [retrieved on 2019-05-31]

**Description**

<u>Field</u>

The present application relates to apparatus and methods for spatial sound rendering. This includes but is not exclusively for spatial sound rendering for multichannel loudspeaker setups.

<u>Background</u>

Parametric spatial audio processing is a field of audio signal processing where the spatial aspect of the sound is described using a set of parameters. For example, in parametric spatial audio capture from microphone arrays, it is a typical and an effective choice to estimate from the microphone array signals a set of parameters such as directions of the sound in frequency bands, and the ratio parameters expressing relative energies of the directional and non-directional parts of the captured sound in frequency bands. These parameters are known to well describe the perceptual spatial properties of the captured sound at the position of the microphone array. These parameters can be utilized in synthesis of the spatial sound accordingly, for headphones binaurally, for loudspeakers, or to other formats, such as Ambisonics.

The directions and direct-to-total energy ratios in frequency bands are thus a parameterization that is particularly effective for spatial audio capture.

A parameter set consisting of a direction parameter in frequency bands and an energy ratio parameter in frequency bands (indicating the proportion of the sound energy that is directional) can be also utilized as the spatial metadata for an audio codec. For example, these parameters can be estimated from microphone-array captured audio signals, and for example a stereo signal can be generated from the microphone array signals to be conveyed with the spatial metadata. The stereo signal could be encoded, for example, with an Advanced Audio Coding (AAC) encoder. A decoder can decode the audio signals into Pulse-code modulation (PCM) signals, and process the sound in frequency bands (using the spatial metadata) to obtain the spatial output, for example a binaural output.

The parametric encoder input formats may be one or several input formats.

An example input format is a first-order Ambisonics (FOA) format. Analyzing FOA input for spatial metadata extraction is documented in scientific literature related to Directional Audio Coding (DirAC), like document "Application of directional audio coding in audio", 19th International Congress on Acoustics, Madrid 2-7 September 2007, and Harmonic planewave expansion (Harpex)

This is because there exists specialist microphone arrays able to directly provide a FOA signal (or specifically a variant, the B-format signal), and analysing such an input has been implemented.

US patent application publication 2014/226823 discloses a method of generating a bitstream representative of multi-channel audio content by specifying audio rendering that includes a matrix to render spherical harmonic coefficients to a number of speaker feeds for generating multichannel audio content.

<u>Summary</u>

There is provided an apparatus for spatial audio signal decoding associated with a plurality of speaker nodes placed within a three dimensional space, the apparatus configured to receive: at least one associated audio signal, the associated audio signal based on a defined speaker layout audio signal; spatial metadata associated with the associated audio signal; at least one parameter representing a defined speaker layout associated with the defined speaker layout audio signal; and at least one parameter representing an output speaker layout; synthesize from the at least one associated audio signal at least one output audio signal based on the spatial metadata and the at least one parameter representing the defined speaker layout and the at least one parameter representing an output speaker layout wherein the apparatus when configured to synthesize from the at least one associated audio signal at least one output audio signal based on the spatial metadata and the at least one parameter representing the defined speaker layout and the at least one parameter representing an output speaker layout is further configured to: divide the at least one associated audio signal into a direct part and diffuse part based on the spatial metadata; synthesize a direct audio signal based on the direct part of the at least one associated audio signal; synthesize a diffuse audio signal based on the diffuse part of the at least one associated audio signal; and combine the direct audio signal and diffuse audio signal to generate the at least one output audio signal, wherein at least one of the synthesis of the direct audio signal and/or synthesis of the diffuse audio signal is based on the at least one parameter representing the defined speaker layout and the at least one parameter representing an output speaker layout.

The apparatus configured to synthesize a diffuse audio signal based on the diffuse part of the at least one associated audio signal may be configured to: decorrelate the at least one associated audio signal; generate a set of gains for each output speaker layout, the gains based on matching a total diffuse part energy distribution with the input speaker layout and output speaker layout.

The apparatus configured to generate a set of gains for each of the output speaker layout, the gains based on matching a total diffuse part energy distribution with the input speaker layout and output speaker layout may be configured to: determine output speaker layout locations; determine absolute sums for x-axis components of speaker nodes based on the output speaker layout locations; determine normalized x-axis components of speaker nodes; determine a x-axis component correction based on the normalised x-components; determine x-axis component corrected energy factors based on the x-component correction; and determine the set of gains for each output speaker nodes.

The apparatus configured to generate a set of gains for each of the output speaker layout, the gains based on matching a total diffuse part energy distribution with the input speaker layout and output speaker layout may be configured to: determine output speaker layout vectors based on the output speaker layout; determine input speaker layout vectors based on the input speaker layout; set an initial energy factor based on the inverse of a number of output speaker nodes; form a target vector based on an energy-factor weighted sum vector of input speaker layout vectors; optimize the energy factors such that an energy-factor weighted sum vector of output speaker layout vectors matches the target vector; remove any negative values from the optimized energy factors; normalize the sum of remaining optimized energy factors to unity; and determine the set of gains from the normalized remaining optimized energy factors.

The apparatus configured to synthesize a diffuse audio signal based on the diffuse part of the at least one associated audio signal may be configured to: determine and disable speaker nodes from the output speaker layout, such that the disabled speaker nodes are located between two other speaker nodes of the output speaker layout and the sequence of three adjacent output speaker nodes lie inclusively between two adjacent input speaker nodes.

The apparatus configured to synthesize a direct audio signal based on the direct part of the at least one associated audio signal may be configured to: determine and disable speaker nodes from the output speaker layout, such that the disabled speaker nodes are located between two other speaker nodes of the output speaker layout and the sequence of three adjacent output speaker nodes lie inclusively between two adjacent input speaker nodes.

The apparatus configured to determine and disable speaker nodes from the output speaker layout, such that the disabled speaker nodes are located between two other speaker nodes of the output speaker layout and the sequence of three adjacent output speaker nodes lie in between two adjacent input speaker nodes may be configured to: determine whether there are more speakers in the output speaker layout than in the input speaker layout; sort the output speaker layout based on azimuth angle to generate a sorted list; append a first and last output speaker according to the sorting to the end of the sorted list and the start of the sorted list respectively; iterate through the appended sorted list in blocks of three adjacent speakers with a hop size of one; keep a block of three adjacent output speakers where at least one input speaker is located in between the outer two speakers of the block; remove a middle of a block of three adjacent output speakers where there are no input speakers in between the outer two speakers of the block.

The apparatus configured to sort the output speaker layout based on azimuth angle to generate a sorted list may be configured to sort only horizontal orientation output speakers.

The apparatus configured to synthesize a direct audio signal based on the direct part of the at least one associated audio signal may be configured to: create an input speaker layout vector base amplitude panning virtual surface arrangement based on the input speaker layout; create an output speaker layout vector base amplitude panning virtual surface arrangement based on the output speaker layout; examine any virtual surfaces based on the output speaker layout vector base amplitude panning virtual surface arrangement matching at least one virtual surface of the input speaker layout vector base amplitude panning virtual surface arrangement and remove all virtual surfaces of the output speaker layout vector base amplitude panning virtual surface arrangement which involve a speaker inside the matching virtual surface; examine any virtual surfaces based on the output layout and remove virtual surface if completely inside an input layout virtual surface; remove any speaker where the output layout virtual surface has further speakers inside to generate a reduced speaker virtual surface arrangement; generate vector base amplitude panning based on the kept output speaker layout vector base virtual surfaces.

The apparatus configured to synthesize a direct audio signal based on the direct part of the at least one associated audio signal may be configured to: create an input speaker layout vector base amplitude panning virtual surface arrangement based on the input speaker layout; examine any output speaker layout speaker nodes matching at least one node within the virtual surface of the input speaker layout vector base amplitude panning virtual surface arrangement and remove all output speaker layout speaker nodes which are not part of the input speaker layout vector base amplitude panning virtual surface arrangement but are located inside of the input speaker layout vector base amplitude panning virtual surface arrangement; create an output speaker layout vector base amplitude panning virtual surface arrangement based on the remaining output speaker layout speaker nodes; examine any virtual surfaces based on the output layout and remove virtual surface if completely inside an input layout virtual surface; remove any speaker where the output layout virtual surface has further speakers inside to generate a reduced speaker virtual surface arrangement; generate vector base amplitude panning based on the kept output speaker layout vector base virtual surfaces.

The apparatus configured to synthesize a diffuse audio signal based on the diffuse part of the at least one associated audio signal may be caused to: create an input speaker layout vector base amplitude panning virtual surface arrangement based on the input speaker layout; examine any output speaker layout speaker nodes matching at least one node within the virtual surface of the input speaker layout vector base amplitude panning virtual surface arrangement and remove all output speaker layout speaker nodes which are not part of the input speaker layout vector base amplitude panning virtual surface arrangement but are located inside of the input speaker layout vector base amplitude panning virtual surface arrangement.

According to a second aspect there is provided a method for spatial audio signal decoding associated with a plurality of speaker nodes placed within a three dimensional space, the method comprising: receiving: at least one associated audio signal, the associated audio signal based on a defined speaker layout audio signal; spatial metadata associated with the associated audio signal; at least one parameter representing a defined speaker layout associated with the defined speaker layout audio signal; and at least one parameter representing an output speaker layout; and synthesizing from the at least one associated audio signal at least one output audio signal based on the spatial metadata and the at least one parameter representing the defined speaker layout and the at least one parameter representing an output speaker layout, wherein the step of synthesizing from the at least one associated audio signal at least one output audio signal based on the spatial metadata and the at least one parameter representing the defined speaker layout and the at least one parameter representing an output speaker layout further comprises dividing the at least one associated audio signal into a direct part and diffuse part based on the spatial metadata; synthesizing a direct audio signal based on the direct part of the at least one associated audio signal; synthesizing a diffuse audio signal based on the diffuse part of the at least one associated audio signal; and combining the direct audio signal and diffuse audio signal to generate the at least one output audio signal, wherein at least one of the synthesizing of the direct audio signal and/or synthesizing of the diffuse audio signal is based on the at least one parameter representing the defined speaker layout and the at least one parameter representing an output speaker layout.

A non-transitory computer readable medium is also envisageable, comprising program instructions for causing an apparatus to perform the method as described above.

An apparatus is also envisageable, configured to perform the actions of the method as described above.

A computer program is also envisageable, comprising program instructions for causing a computer to perform the method as described above.

A computer program product stored on a medium is also envisageable, for causing an apparatus to perform the method as described herein.

An electronic device may comprise an apparatus as described herein

A chipset may comprise apparatus as described herein.

Embodiments of the present application aim to address problems associated with the state of the art.

Summary of the Figures

For a better understanding of the present application, reference will now be made by way of example to the accompanying drawings in which:

Figure 1 shows schematically a vector base amplitude panning example comprising a loudspeaker triplet and active triangle;

Figure 2 shows schematically a vector base amplitude panning triangulation;

Figure 3a shows schematically an example spatial capture and synthesizer according to some embodiments;

Figure 3b shows a flow diagram of the method of operating the example spatial capture and synthesizer according to some embodiments;

Figure 4a shows schematically an example spatial synthesizer according to some embodiments;

Figure 4b shows a flow diagram of an example method of operating the example spatial synthesizer according to some embodiments;

Figure 5 shows a flow diagram of determining the method for the diffuse stream according to some embodiments;

Figure 6 shows an example sum vector for a 5.0 loudspeaker setup;

Figure 7 shows a flow diagram of a first method for the diffuse stream according to some embodiments;

Figure 8 shows an example loudspeaker angle notation used in some embodiments;

Figure 9 shows a flow diagram of a second method for the diffuse stream according to some embodiments;

Figure 10 shows a flow diagram of a method for modifying direct stream reproduction using the loudspeaker layout parameter;

Figure 11 shows a flow diagram of a method for modifying direct stream reproduction using the loudspeaker layout parameter for 3D loudspeaker configurations; and

Figure 12 shows schematically an example device suitable for implementing the apparatus shown.

Embodiments of the Application

The following describes in further detail suitable apparatus and possible mechanisms for the provision of efficient spatial processing based on a range of audio input formats.

Spatial metadata consisting of directions and direct-to-total energy ratio (or diffuseness-ratio) parameters in frequency bands is particularly suitable for expressing the perceptual properties of natural sound fields.

However, sound scenes, such as 5.1 loudspeaker mixes, can originate from various different loudspeaker layouts such as stereo, 4.0, 5.1, 7.1, 22.1, and the like. When such a synthetic sound scene is encoded with the aforementioned spatial metadata there may be a loss of information. The aim of the embodiments as described in further detail is for the reproduced sound field to attempt to fully correspond to what a listener would perceive if they were listening to the original 5.1 or other original surround mix.

In particular, the concept as discussed in the following embodiment attempts to accurately reproduce the spatial distribution of the diffuse/ambient sound energy at the reproduced sound compared to the original spatial sound. Similarly the embodiments may aim to accurately reproduce the perceived spatial effect of sources when reproduced over loudspeaker configurations other than the input configuration.

The embodiments may furthermore be configured to control, during rendering, whether the intent is to optimize the overall reproduction quality or whether the intent is to reproduce the experience as close as possible to the original surround mix.

These for example may be differing requirements. For example on one hand the parametric spatial audio representation aims to abstract away the effect of the original channel layout and produce a generic parametric representation which can be rendered to any loudspeaker configuration. On the other hand it may be desired to preserve the original artistic intent and qualities in the channel-based representation.

The concept as discussed in further detail hereafter is to add a channel layout metadata field into the bitstream implemented by the codec and employ a method to utilize this metadata during synthesis and rendering to enable reproduction of the spatial audio such that it more closely represents the original surround mix.

As such the embodiments described hereafter relate to audio encoding and decoding using a sound-field related parameterization (direction(s) and ratio(s) in frequency bands) and where these embodiments aim to improve the reproduction quality of loudspeaker surround mixes encoded with the aforementioned parameterization. Furthermore these embodiments describe where the quality of the loudspeaker surround mixes is improved by conveying a loudspeaker layout parameter along with the directional parameter(s), and reproducing the sound based on the directional parameter(s) and the input loudspeaker layout parameter, such that the input loudspeaker layout parameter affects at least one of diffuse stream synthesis or direct stream synthesis using the direction(s) and ratio(s) in frequency bands.

In particular, the embodiments as discussed hereafter are configured to modify the diffuse stream synthesis using the input loudspeaker layout parameter such that the energy distribution of the original surround mix is better reproduced. The embodiments further describe modification to the direct stream synthesis so that phantom sources present in the original surround mix are more authentically reproduced.

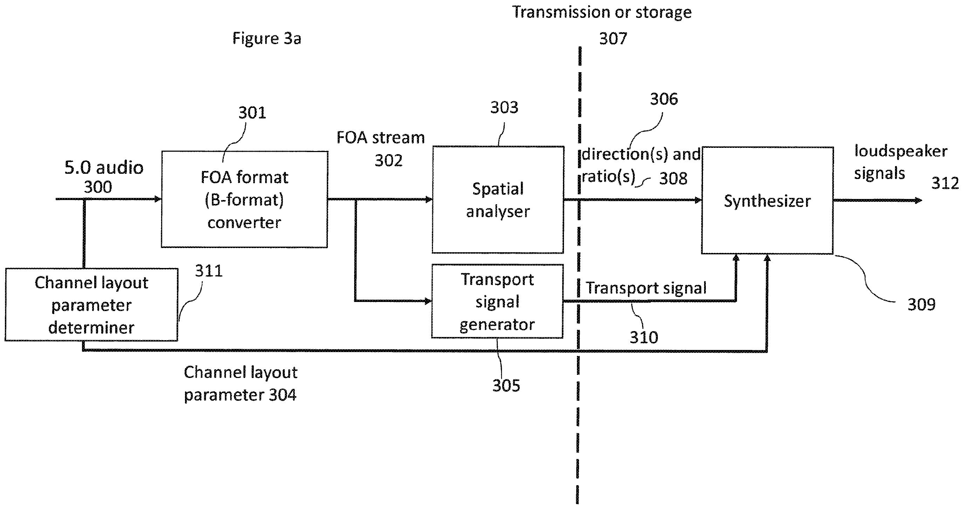

With respect to Figure 3a an example spatial capture and synthesizer according to some embodiments is shown. The spatial capture and synthesizer is shown in this example receiving a 5.0 format audio signal 300 as an input.

A channel layout parameter determiner 311 is configured to receive the 5.0 format audio signal 300 and determine a suitable channel layout parameter 304. The channel layout or speaker layout or loudspeaker layout parameter can be an enumeration identifying possible loudspeaker configurations known to the system. Each enumeration may be associated to a loudspeaker configuration comprising the number of loudspeakers, and the loudspeaker azimuth and elevation angles.

For unknown speaker layouts, the parameter may define the number of speakers, and the speaker locations as azimuth, elevation pairs, or as indices to quantized azimuth and elevation slots.

A first order Ambisonics (FOA) (or a B-format variant) converter 301 is configured to receive the 5.0 format audio signal 300 and convert it to a suitable FOA (B-format) stream 302. The FOA converter 301 in some embodiments is configured to generate the FOA (for example the B-format variant) signals from a loudspeaker mix based on knowledge of the positions of the channels in the input audio signals. In other words the $w_i(t)$, $x_i(t)$, $y_i(t)$, $z_i(t)$ components of a FOA signal can be generated from a loudspeaker signal $s_i(t)$ at $azi_i$ and $ele_i$ by

$$FOA_i(t) = \begin{bmatrix} w_i(t) \\ x_i(t) \\ y_i(t) \\ z_i(t) \end{bmatrix} = s_i(t) \begin{bmatrix} 1 \\ \cos(azi_i)\cos(ele_i) \\ \sin(azi_i)\cos(ele_i) \\ \sin(ele_i) \end{bmatrix}$$

The w,x,y,z signals are generated for each loudspeaker (or object) signal $s_i$ having its own azimuth and elevation direction.

The output signal combining all such signals may be calculated as $\sum_{i=1}^{NUM\_CH} FOA_i(t)$ . In other words the combination of each speaker or channel signal to the total FOA signals and *NUM_CH* is the number of speaker or channel signals.

A spatial analyser 303 is configured to receive the FOA stream 302 and generate suitable spatial parameters such as directions 306 and ratios 308. The spatial analyser 303 can, for example, be a computer or a mobile phone (running suitable software), or alternatively a specific device utilizing, for example, field programmable gate arrays (FPGAs) or application specific integrated circuits (ASICs).

A suitable spatial analysis method example is Directional Audio Coding (DirAC). DirAC methods may estimate the directions and diffuseness ratios (equivalent information to a direct-to-total ratio parameter) from a first-order Ambisonic (FOA) signal, or its variant the B-format signal.

In some embodiments the DirAC method transforms the signals of $\sum_{i=1}^{NUM\_CH} FOA_i(t)$ into frequency bands using a suitable time to frequency domain transform, for example using a short time Fourier transform (STFT), resulting in time-frequency signals w(k,n), x(k,n), y(k,n), z(k,n) where k is the frequency bin index and n is the time index.

In such examples the DirAC method may estimate the intensity vector by

$$I(k,n) = -Re\left\{ w^*(k,n) \begin{bmatrix} x(k,n) \\ y(k,n) \\ z(k,n) \end{bmatrix} \right\}$$

where Re means real-part, and asterisk * means complex conjugate. The intensity expresses the direction of the propagating sound energy, and thus the direction parameter may be determined by the opposite direction of the intensity vector.

The intensity vector in some embodiments may be averaged over several time and/or frequency indices prior to the determination of the direction parameter.

Furthermore in some embodiments the DirAC method may determine the diffuseness based on FOA components (assuming Schmidt semi-normalisation (SN3D normalization)). In SN3D normalisation for diffuse sound the sum of energies of all Ambisonic components within an order is equal. E.g., if zeroth order W has 1 unit of energy, then each first order X Y Z have 1/3 units of energy (sum is 1). And so forth for higher orders.

The diffuseness may therefore be determined as

$$\psi(k,n) = 1 - \frac{|E[I(k,n)]|}{E[0.5(w^2(k,n) + x^2(k,n) + y^2(k,n) + z^2(k,n))]}$$

The diffuseness is a ratio value that is 1 when the sound is fully ambient, and 0 when the sound is fully directional. In some embodiments all parameters in the equation are typically averaged over time and/or frequency. The expectation operator E[ ] can be replaced with an average operator in some systems.

In some embodiments, the direction parameter and the diffuseness parameter may be analysed from FOA components which have been obtained in two different ways. In particular, in this embodiment the direction parameter may be analysed from the signals $\sum_{i=1}^{NUM\_CH} FOA_i(t)$ as described above. The diffuseness may be analysed from another set of FOA signals denoted as $\sum_{i=1}^{NUM\_CH} \widehat{FOA}_i(t)$ , and described in more detail below. As a particular example, let us consider the conversion to FOA components from a 5.0 input having loudspeakers at azimuth angles 0, +/-30, and +/-110 (all elevations are zero, cos($ele_i$)=1, sin($ele_i$) = 0 for all i). The FOA components for the analysis of the direction parameter are obtained as above:

$$FOA_i(t) = \begin{bmatrix} w_i(t) \\ x_i(t) \\ y_i(t) \\ z_i(t) \end{bmatrix} = s_i(t) \begin{bmatrix} 1 \\ \cos(azi_i) \\ \sin(azi_i) \\ 0 \end{bmatrix}$$

The diffuseness may be analysed from another set of FOA signals obtained as

$$\widehat{FOA}_i(t) = \begin{bmatrix} \widehat{w}_i(t) \\ \widehat{x}_i(t) \\ \widehat{y}_i(t) \\ \widehat{z}_i(t) \end{bmatrix} = s_i(t) \begin{bmatrix} 1 \\ \cos(\widehat{azi}_i) \\ \sin(\widehat{azi}_i) \\ 0 \end{bmatrix}$$

where $\widehat{azi}_i$ is a modified virtual loudspeaker position. The modified virtual loudspeaker positions for diffuseness analysis are obtained such that the virtual loudspeakers locate with even spacing when creating the FOA signals. The benefit of such evenly-spaced positioning of the virtual loudspeakers for diffuseness analysis is that the incoherent sound is arriving evenly from different directions around the virtual microphone and the temporal average of the intensity vector sums up to values near zero. In the case of 5.0, the modified virtual loudspeaker positions are 0, +/-72, +/-144 degrees. Thus, the virtual loudspeakers have a constant 72 degree spacing.

Similar modified virtual loudspeaker positions can be created for other loudspeaker configurations to ensure a constant spacing between adjacent speakers. In an embodiment of the invention, the modified virtual loudspeaker spacing is obtained by dividing the full 360 degrees with the number of loudspeakers in the horizontal plane. The modified virtual loudspeaker positions are then obtained by positioning the virtual loudspeakers with the obtained spacing starting from the centre speaker or other suitable starting speaker.

In some embodiments an alternative ratio parameter may be determined, for example, a direct-to-total energy ratio, which can be obtained as

$$r(k,n) = 1 - \psi(k,n)$$

When averaged, the diffuseness (and direction) parameters may be determined in frequency bands combining several frequency bins $k$, for example, approximating the Bark frequency resolution.

DirAC, as described above, is one possible spatial analysis method option to determine the directional and ratio metadata. The spatial audio parameters also called spatial metadata or metadata may be determined according to any suitable method. For example by simulating a microphone array and using a spatial audio capture (SPAC) algorithm. Furthermore the spatial metadata may include (but are not limited to): Direction and direct-to-total energy ratio; Direction and diffuseness; Inter-channel level difference, inter-channel phase difference, and inter-channel coherence. In some embodiments these parameters are determined in time-frequency domain. It should be noted that also other parametrizations may be used than those presented above. In general, typically the spatial audio parametrizations describe how the sound is distributed in space, either generally (e.g., using directions) or relatively (e.g., as level differences between certain channels).

A transport signal generator 305 is further configured to receive the FOA/B-format stream 302 and generate suitable transport audio signals 310. The transport audio signals may also be known as associated audio signals and be based on the spatial audio signals which contains directional information of a sound field and which is input to the system. The transport signal generator 305 may be configured to generate any suitable number of transport audio signals (or channels) and/or signal format. For example in some embodiments the transport signal generator is configured to generate two transport audio signals. In some embodiments the preprocessor is further configured to encode the audio signals. In some embodiments the transport signals are in any suitable format. For example in some embodiments the transport signals are FOA signals or unprocessed (original) input channels. In these embodiments the spatial analyser may be implemented on the decoder side of the dashed line with the synthesizer 309.

For example in some embodiments the audio signals may be encoded using an advanced audio coding (AAC) or enhanced voice services (EVS) coding. In some embodiments the transport signal generator 305 may be configured to equalize the audio signals, apply automatic noise control, dynamic processing, or any other suitable processing.

The channel layout parameter 304, spatial metadata (the directions 306 and ratios 308) and the transport audio signals 310 may be transmitted or stored for example within some storage 307 such as memory, or alternatively directly processed in the same device. In some embodiments the channel layout parameter 304, spatial metadata 306, 308 and the transport audio signals 310 may be encoded or quantized or combined or multiplexed into a single data stream by a suitable encoding and/or multiplexing operation. In some embodiments the coded audio signal is bundled with a video stream (e.g., 360-degree video) in a media container such as a Moving Picture Experts Group MPEG-4 Part 14 or mp4 container, to be transmitted to a suitable receiver.

The synthesizer 309 is configured to receive the channel layout parameter 304, transport audio signals 310, the spatial parameters such as the directions 306 and the ratios 308 and the channel layout parameter and generate the loudspeaker audio signals 312.

The synthesizer 309, for example may be configured to generate the loudspeaker audio signals by employing spatial sound reproduction where sound in 3D space is positioned to arbitrary directions. The synthesizer 309 can, for example, be a computer or a mobile phone (running suitable software), or alternatively a specific device utilizing, for example, field-programmable gate arrays (FPGAs) or application-specific integrated circuits (ASICs). Based on the data stream (the transport audio signals and the metadata). The synthesizer 309 can be configured to produce output audio signals, which are shown in Figure 3a as loudspeaker signals 312. The output signals can in some embodiments be any suitable format audio signals and may for example be binaural signals for headphone listening, multi-channel loudspeaker signals or Ambisonic signals. In some embodiments the spatial analyser and synthesizer (and other components as described herein) may be implemented within the same device, and may be also a part of the same software.

An example method for implementing such positioning is using vector base amplitude panning (VBAP).

VBAP is based on

1) automatically triangulating the loudspeaker setup,
2) selecting appropriate triangle based on the direction (such that for a given direction three loudspeakers are selected which form a triangle where the given direction falls in), and
3) computing gains for the three loudspeakers forming the particular triangle.

In some embodiments VBAP gains (for each azimuth and elevation) and the loudspeaker triplets or other suitable numbers of loudspeakers or speaker nodes (for each azimuth and elevation) may be pre-formulated into a lookup table stored in the memory. In some embodiments a real-time method then performs the amplitude panning by finding from the memory the appropriate loudspeaker triplet (or number) for the desired panning direction, and the gains for these loudspeakers corresponding to the desired panning direction.

The first stage of VBAP is division of the 3D loudspeaker setup into triangles. There is no single solution to the generation of the triangulation and the loudspeaker setup can be triangulated in many ways. In some embodiments an attempt to try to find triangles or polygons of minimal size (no loudspeakers inside the triangles and sides having as equal length as possible). In a general case, this is a valid approach, as it treats auditory objects in any direction equally, and tries to minimize the distances to the loudspeakers that are being used to create the auditory object at that direction.

Another computationally fast method for the triangulation or virtual surface arrangement generation is to generate a convex hull as a function of the data points determined by the loudspeaker angles. This is also a generic approach that treats all directions and data points equally.

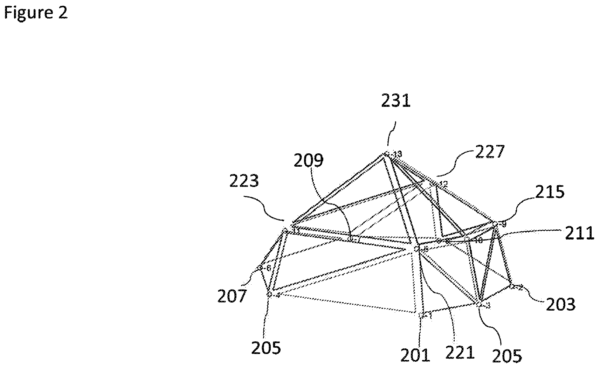

An example triangulation is shown in Figure 2. Figure 2 shows a series of virtual surfaces in the form of triangles which have corners located at the position of speaker nodes 201, 203, 205, 207, 209, 211, 221, 223, 225, 227, 231. This example triangulation exemplifies a case with loudspeakers only at the horizontal plane and positive elevations, and no generation of triangles below the horizontal was performed. In such a case it could be that any intended reproduced directions below the horizontal plane would be reproduced using the horizontal loudspeakers.

The next or second stage is to formulate panning gains corresponding to the panning directions.

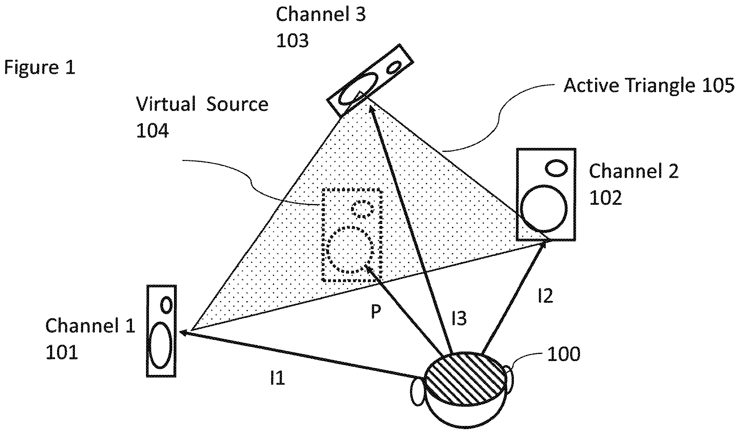

Figure 1 shows for example three loudspeakers, channel 1 101 located at the direction of unit vector $\mathbf{l_1}$, channel 2 102 located at the direction of unit vector $\mathbf{l_2}$ and channel 3 101 located at the direction of unit vector $\mathbf{l_3}$. These vectors are defined relative to the listener 100 at a point of origin and show the defined active triangle 105 defined by the three loudspeakers. Furthermore is shown a virtual source 104 located at the direction of unit vector $\mathbf{p}$ relative to the listener 100 within the active triangle 105.

The next stage is to formulate panning gains corresponding to the panning directions.

The vector base amplitude panning refers to the method where the three unit vectors $\mathbf{l_1}$, $\mathbf{l_2}$, $\mathbf{l_3}$ (the vector base) are assumed from the point of origin to the positions of the three loudspeakers forming the triangle where the panning direction falls in as shown in Figure 1.

The panning gains for the three loudspeakers are determined such that these three unit vectors are weighted such that their weighted sum vector points towards the desired amplitude panning direction. This can be solved as follows. A column unit vector $\mathbf{p}$ is formulated pointing towards the desired amplitude panning direction, and a vector $\mathbf{g}$ containing the amplitude panning gains can be solved by a matrix multiplication

$$\mathbf{g}^T = \mathbf{p}^T \begin{bmatrix} l_1^T \\ l_2^T \\ l_3^T \end{bmatrix}^{-1}$$

where $^{-1}$ denotes the matrix inverse. After formulating gains **g,** their overall level is normalized such that for the final gains the energy sum $\mathbf{g}^T\mathbf{g}$ = *1*.

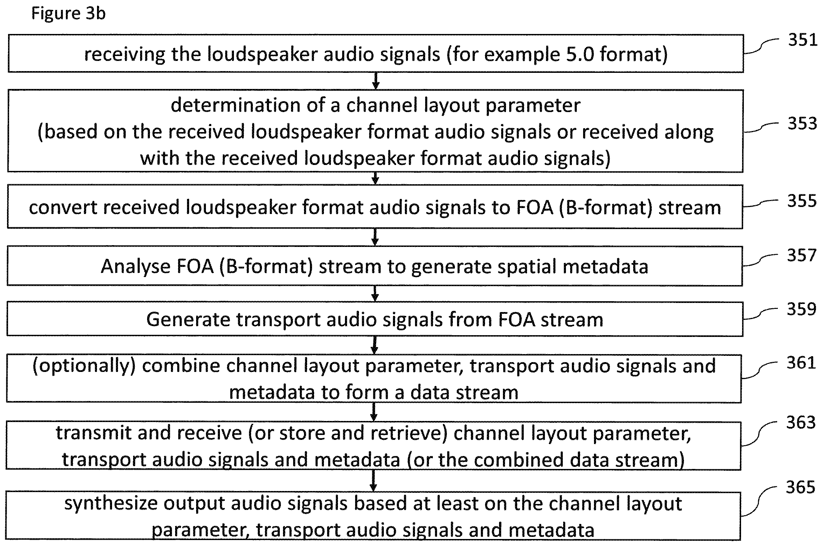

With respect to Figure 3b is shown an example summary of the operations of the apparatus shown in Figure 3a.

The initial operation is receiving the loudspeaker (for example 5.0 format) audio signals as shown in Figure 3b by step 351.

The determination of a channel layout parameter 304 based on the received speaker layout audio signals (or received along with the received speaker layout audio signals) is shown in Figure 3b by step 353.

The received speaker layout audio signals may be converted to a FOA format (for example the B-format variant) stream as shown in Figure 3b by step 355.

The converted FOA audio signals may then be processed to generate transport audio signals as shown in Figure 3b by step 357.

Also the converted FOA audio signals may be analysed to generate the metadata (for example the directions and/or energy ratios) as shown in Figure 3b by step 359.

The channel layout parameter, transport audio signals and metadata may then be optionally combined to form a data stream as shown in Figure 3b by step 361.

The channel layout parameter, transport audio signals and metadata (or the combined data stream) may then be transmitted and received (or stored and retrieved) as shown in Figure 3b by step 363.

Having received or retrieved the channel layout parameter, transport audio signals and metadata (or data stream), the output audio signals may be synthesized based at least on the channel layout parameter, transport audio signals and metadata as shown in Figure 3b by step 365.

The synthesized audio signal output signals may then be output to a suitable output.

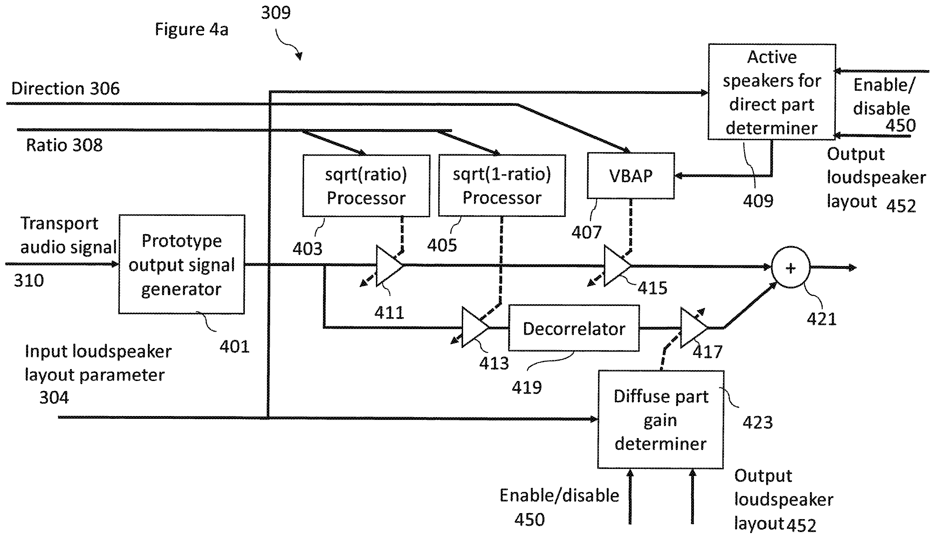

With respect to Figure 4a an example synthesizer 309 according to some embodiments is shown.

The inputs to the synthesizer 309 may in some embodiments be direction(s) 306, ratio(s) 308 spatial metadata, the transport audio signal stream 310 and the input loudspeaker layout parameter 304. Further inputs to the system may be an output loudspeaker layout parameter 452 and an enable/disable 450 input.

A prototype output signal generator 401 or any other means to generate a prototype output signal from the transport signals may be configured to receive the transport audio signals 310 and generate a "prototype output signal". The transport audio signal stream 310 may be in the time domain and converted to a time-frequency domain before generating the prototype output signal. An example generation of a prototype signal from two transport signals may be by setting the left side prototype output channel(s) to be copies of the left transport channel, setting the right side prototype output channel(s) to be copies of the right transport channels, and the centre (or median) prototype channels to be a mix of the left and right transport channels.

An example of the prototype output signal is a virtual microphone signal which attempts to regenerate a virtual microphone signal when the transport signal is actually a FOA signal.

A square root (ratio) processor 403 may receive the ratio(s) 308, which in the following examples is in the form of direct-to-total energy ratio, and generate a square root of the value.

A first gain stage 411 (a direct signal generator) may receive the square root of the ratio(s) and apply this to the prototype output audio signals to generate the direct audio signal part.

An active speakers for direct part determiner 409 is configured to receive the enable/disable input 450, the output loudspeaker layout 452 and the input loudspeaker layout parameter 304 and be configured to make the direct stream sound more like in the original surround mix by modifying the active set of loudspeakers for direct sound reproduction.

Thus in some embodiments the active speakers for direct part determiner 409 is configured to selectively (based on the inputs) disable speakers from the output setup, such that the disabled speakers are between two other speakers of the output setup and the sequence of three adjacent output speakers lies in between two adjacent input speakers.

This in some embodiments may produce the effect that direct sounds which are originally reproduced as phantom sources with amplitude panning between two loudspeakers are also reproduced as phantom sources in the output speaker layout more often, since an extra physical speaker in the output speaker layout between two input speaker layout speakers is not used.

This may cause the timbral quality and spatial extent of the source to be closer to the original. However the active speakers for direct part determiner 409 may be employed to ensure that the output speaker setup is not made too sparse since only middle speaker(s) from a block of three adjacent output speakers which lie in between a set of two input speakers is or are removed.

A VBAP 407 is configured to receive the direction(s) 306 and the output of the active speakers for the direct part determiner output 409 and generate suitable VBAP gains in a manner similar to that described above.

The direct part gain stage 415 is configured to apply the VBAP gains to the direct part audio signals to generate a spatially processed direct part.

A square root (1-ratio) processor 405 may receive the ratio(s) 308, which in the following examples is in the form of direct-to-total energy ratio, and generate a square root of the 1-ratio value.

A second gain stage 413 (a diffuse signal generator) may receive the square root of the 1-ratio(s) and apply this to the prototype output audio signals to generate the diffuse audio signal part.

A diffuse part gain determiner 423 is configured to receive the enable/disable input 450, the output loudspeaker layout 452, the ratio(s) 308 and the input loudspeaker layout parameter 304.

For the diffuse part audio signals the diffuse part gain determiner 423 may be configured to selectively (based on the inputs) distribute the energy unevenly to different directions where it is determined that the original loudspeaker setup was not uniform. The distribution of energy in the diffuse reproduction may therefore be closer to the original surround mix. Furthermore the diffuse part gain determiner 423 may selectively (based on the inputs) distribute the energy evenly to all loudspeakers but will not sound as close to the original surround mix if the original loudspeaker setup of the surround mix had a different spatial balance of the loudspeakers.

A diffuse gain stage 417 may be configured to receive the diffuse part gains and apply them to the diffuse audio signal part.

A combiner 421 may then be configured to combine the processed diffuse audio signal part and the processed direct signal part and generate suitable output audio signals. In some embodiments these combined audio signals may be further converted to a time domain form before output to a suitable output device.

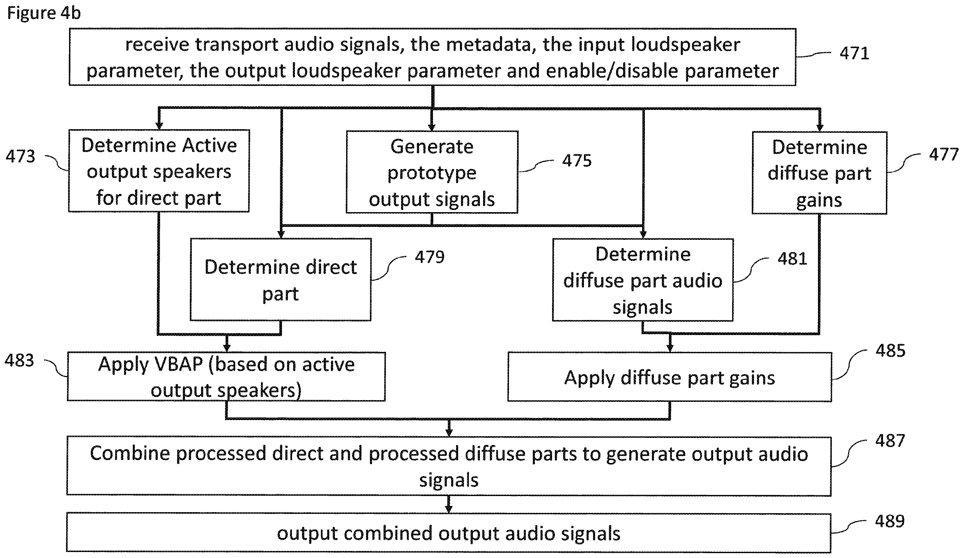

With respect to Figure 4b a flow diagram of the operations of the synthesizer 309 shown in Figure 4a is shown.

The method may comprise receiving the FOA audio signals, the metadata, the input loudspeaker parameter, the output loudspeaker parameter and enable/disable parameter as shown in Figure 4b by step 471.

The method may also comprise generating the prototype output audio signals based on the FOA audio signals as shown in Figure 4b by step 475.

The method may also comprise determining the direct part from the prototype output audio signals and the ratio metadata as shown in Figure 4b by step 479.

The method may also comprise determining the diffuse part from the prototype output audio signals and the ratio metadata as shown in Figure 4b by step 481.

The active output speakers for the direct part VBAP processing may then be determined based on the input loudspeaker parameter, the output loudspeaker parameter and enable/disable parameter is shown in Figure 4b by step 473.

The application of VBAP to the direct part and based on the determined active speakers is shown in Figure 4b by step 483.

The method may also comprise determining diffuse part gains based on the input loudspeaker parameter, the output loudspeaker parameter and enable/disable parameter as shown in Figure 4b by step 477.

The method may further comprise applying the diffuse part gains to the determined diffuse part as shown in Figure 4b by step 485.

The processed direct and diffuse parts may then be combined to generate the output audio signals as shown in Figure 4b by step 487.

The combined output audio signals may then be output as shown in Figure 4b by step 489.

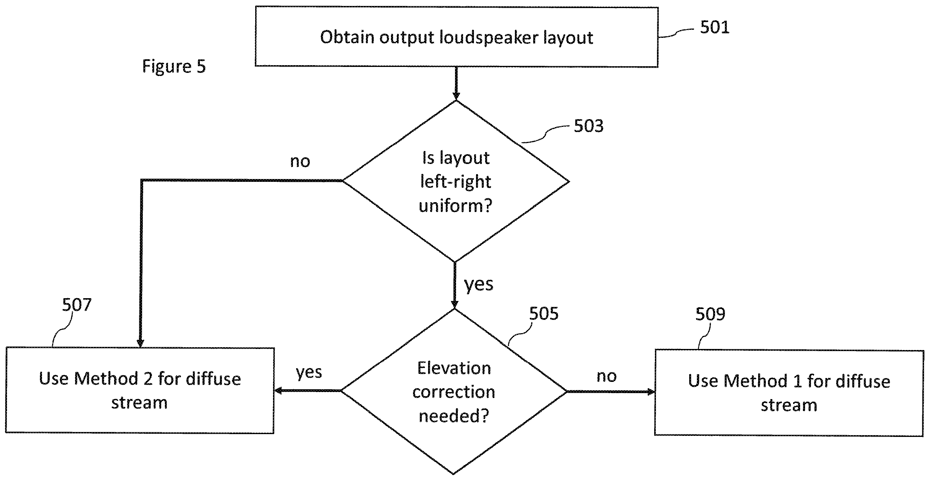

With respect to Figure 5 a flow diagram showing the operation of an example diffuse part gain determiner 423 according to some embodiments.

The example diffuse part gain determiner 423 may be configured to receive/obtain the output loudspeaker layout as shown in Figure 5 by step 501.

In some embodiments the example diffuse part gain determiner 423 may then be configured to determine whether the output loudspeaker layout is left-right uniform as shown in Figure 5 by step 503.

Where the output loudspeaker layout is left-right uniform then the example diffuse part gain determiner 423 is configured to determine whether an elevation correction is needed as shown in Figure 5 by step 505.

Where the output loudspeaker layout is left-right uniform and no elevation correction is needed then a first gain determination method as described hereafter may be employed as shown in Figure 5 by step 509.

Where the output loudspeaker layout is not left-right uniform (or in other words left-right asymmetric) or the output loudspeaker layout is left-right uniform and elevation correction is needed then a second gain determination method as described hereafter may be employed as shown in Figure 5 by step 507.

The diffuse part gain determiner 423 generally is configured to attempt to equalize or match the total ambient sound energy distribution with the input loudspeaker layout and output loudspeaker layout.

In some embodiments the diffuse part gain determiner 423 the method attempts to find gains $g_m$ and energy factors $e_m$ $\left(g_m = \sqrt{e_m}\right)$ for the $M$ output speakers with $m = 1, \dots, M$ such that, after new gains are obtained,

1) The sum of energy-factor weighted vectors from the centre position to the input loudspeakers equals or matches the sum of energy-factor weighted vectors from the centre position to the output loudspeakers.

2) $\sum_{m=1}^{M} g_m^2 = 1$

3) The energy factors $e_m$ do not excessively deviate from the average of $\frac{1}{M}$.

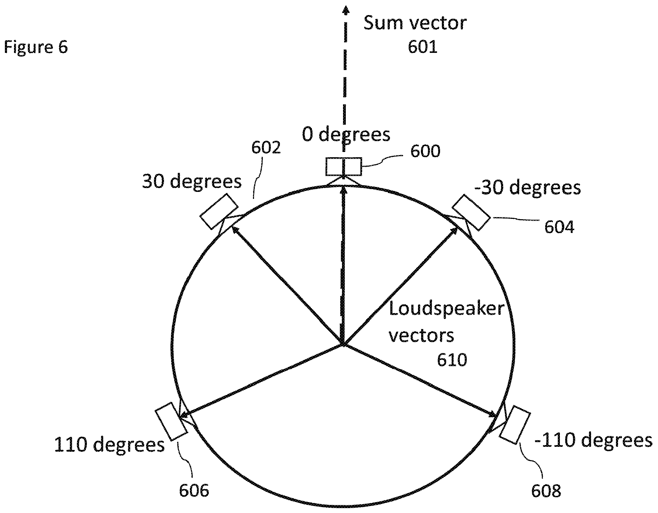

With respect to Figure 6 an example output loudspeaker arrangement is shown comprising centre speaker 600 at 0 degrees, right speaker 604 at -30 degrees, left speaker 602 at 30 degrees, left rear speaker 606 at 110 degrees and right rear speaker 608 at -110 degrees. Figure 6 furthermore shows the sum vector 601 formed from the loudspeaker vectors 610 for the 5.0 loudspeaker setup shown.

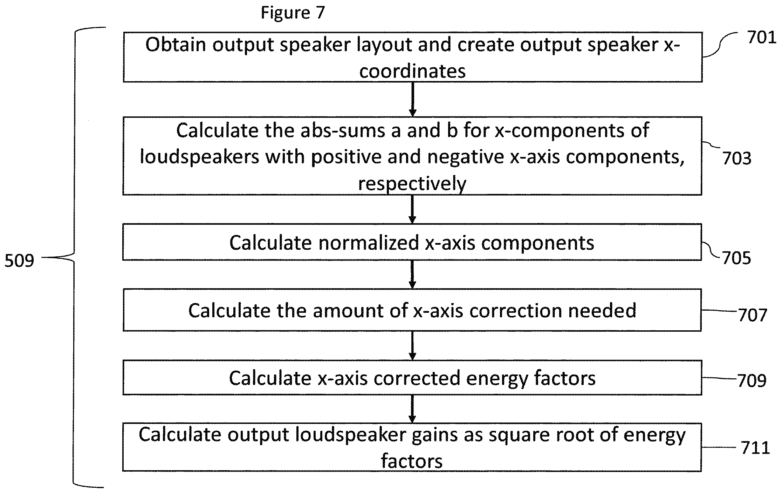

With respect to Figure 7 the first gain determination method as employed by the diffuse part gain determiner is shown.

The first gain determination method attempts to fix the front-back energy balance and provides a computationally and algorithmically simple approach that does not require matrix inversion.

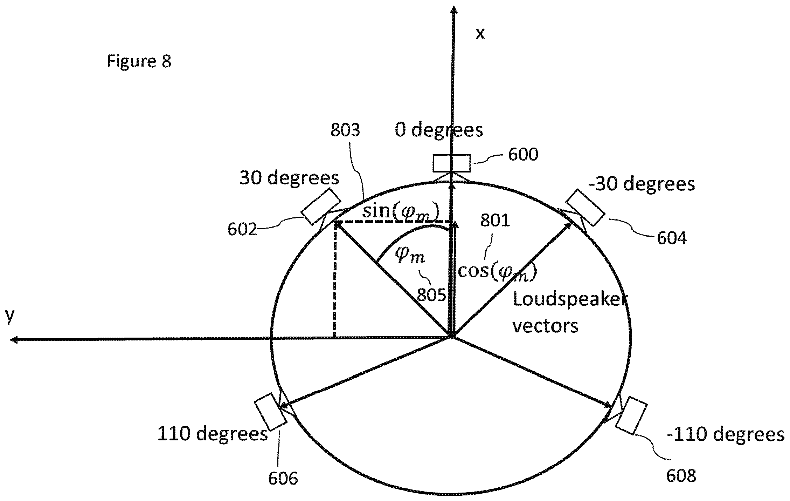

Figure 8 shows the notations used for loudspeaker angles. The azimuth angle $\varphi_m$ is the azimuth angle of the $m$th speaker in radians. Positive angles run counter-clockwise up to $\pi$ and negative angles clockwise up to $-\pi$. The x-axis components of the output loudspeaker vectors are denoted with $x_m = \cos(\varphi_m)$.

The first operation is the obtaining or receiving the output speaker layout and creating output speaker x-coordinates as shown in Figure 7 by step 701.

Then the absolute sums of the x-coordinates are formed, for positive x-coordinates and negative x-coordinates separately. The sum of positive x-coordinates is stored in $a$ and the sum of the absolute values of the negative x-coordinates is stored in $b$ as shown in Figure 7 by step 703. In other words defining $a = \sum_k x_k$, where $k$ belongs to the set of indices where $x_k > 0$ and $b = \sum_l |x_l|$, where $l$ belongs to the set of indices where $x_l < 0$.

Then normalized x-axis components are determined as shown in Figure 7 by step 705. The normalised components may for example be determined as

$$y_m = \begin{cases} \frac{x_m}{a}, if & x_m \geq 0 \\ \frac{x_m}{b}, if & x_m < 0 \end{cases}.$$

Then the amount of x-axis correction needed may be calculated as shown in Figure 7 by step 707. This x-axis correction may be determined using

$$\Delta x = \frac{1}{N} \sum_{n=1}^{N} \cos(\theta_n) - \frac{1}{M} \sum_{m=1}^{M} \cos(\varphi_m),$$

where $\theta_n$ is the input setup loudspeaker azimuth, and $\varphi_m$ is the output setup loudspeaker azimuth.

Then x-axis corrected energy factors may be determined as shown in Figure 7 by step 709. The corrected energy factors may be

$$\bar{e}_m = \frac{1}{M} + \frac{\Delta x \cdot y_m}{\sum_{k=1}^{M} (\cos(\varphi_k) \cdot y_k)}.$$

To ensure that energy factors are positive, any negative energy factors are set to zero.

The energy factors are further normalized to sum to unity:

$$\hat{e}_m = e_m / \sum_{j=1}^{M} e_j.$$

Furthermore in some embodiments the energy factors may be limited so that they cannot deviate from the average energy factor of $\frac{1}{M}$ by more than 6dB. After the limiting, the energy factors may be again normalized so that they sum to unity, denote the factors after the limiting and second normalization with $\tilde{e}_m$.

Finally, the gains are calculated as the square root values of the energy factors as shown in Figure 7 by step 711. This may be mathematically derived as: $g_m = \sqrt{\tilde{e}_m}$ .

The system may then as described above apply the obtained gains to the diffuse stream during synthesis to match the energy distribution of diffuse sound to the energy distribution in the original surround mix.

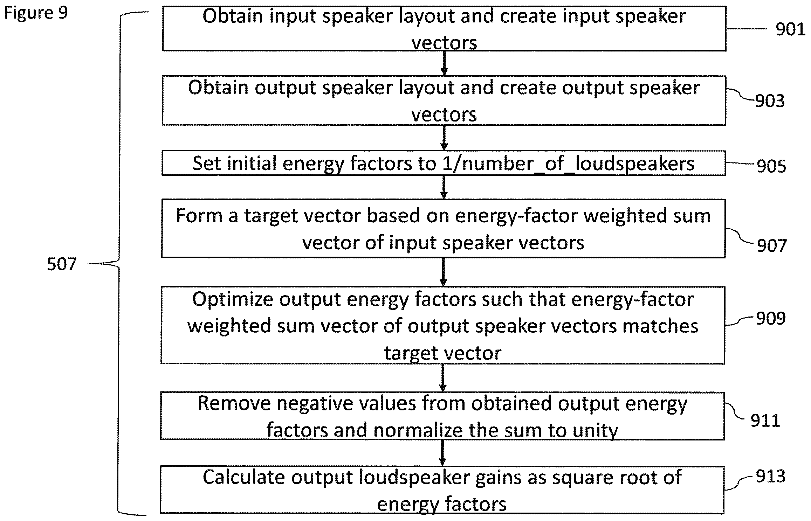

With respect to Figure 9 the second gain determination method as employed by the diffuse part gain determiner is shown. The second gain determination method may be employed for obtaining the gains for arbitrary (for example left-right asymmetric) loudspeaker setups, including elevated speakers. In the example shown hereafter the elevation (z-coordinate) is not noted for simplicity of presentation but adding the z-coordinate is straightforward.

An operation is the obtaining or receiving the input speaker layout and creating input speaker vectors as shown in Figure 9 by step 901.

The nth loudspeaker vector for the input speaker layout may thus be defined as $I_n = [\cos(\theta_n) , \sin(\theta_n)]^T$, $n = 1, ... , N$, and $\theta_n$ is the loudspeaker azimuth angle in radians.

Another operation is the obtaining or receiving the output speaker layout and creating output speaker vectors as shown in Figure 9 by step 903.

The mth loudspeaker vector for the output speaker layout is denoted with $O_m = [\cos(\varphi_m),\sin(\varphi_m)]^T$, with $m = 1, ... , M$ and $\varphi_m$ the corresponding azimuth in radians.

The initial normalised energy-factor for each loudspeaker is set to the inverse of the number of loudspeakers, in other words $e_n = \frac{1}{N}$ , as shown in Figure 9 by step 905. In some embodiments other weightings may be applied.

From this an energy-factor weighted sum vector of input loudspeaker layout is formed $\frac{1}{N}\sum_{n=1}^{N} I_n$ .

A constraint vector **t** is formed by appending one to the sum vector to constrain the energy to sum to unity:

$$ t = \begin{bmatrix} \frac{1}{N}\sum_{n=1}^{N} I_n \\ 1 \end{bmatrix}. $$

This vector is size 3x1 in our example of horizontal surround setup, and would be 4x1 in a case of 3D configurations.

A target 3 by $M$ output loudspeaker matrix with the similarly appended 1 is formed as shown in Figure 9 by step 907 and shown as

$$ L = \begin{bmatrix} O_1 & ... & O_M \\ 1 & ... & 1 \end{bmatrix}. $$

Therefore L is a 3xM matrix in a 2D configuration and 4xM for a 3D configuration.

The energy factors $e_m$ can be represented as an M by 1 vector **e**. The goal is to find the energy factor vector **e** such that $t = Le$ as shown in Figure 9 by step 909.

This can be accomplished by minimizing the norm $\|Le - t\|$. The solution can be found as:

$$ e = L^+ t $$

where $L^+$ is the pseudoinverse of $L$.

After finding the energy factor vector the method further comprises removing negative energy factors and normalizing their sum to unity as shown in Figure 9 by step 911.

The following operation is obtaining the gains via the square root as described in relation to first method as shown in Figure 9 by step 913.

In some embodiments the second method further comprises limiting the energy factors to not deviate from the average energy factor by more than 6dB in a manner as described previously.

In some embodiments the correction gains for different input-output speaker layout pairs may be precomputed to a lookup table and then obtained from there during runtime without having to perform the matrix inversion in a resource constrained system.

As discussed in some embodiments the operation of determining active output speakers for the direct part is performed to attempt to make the direct stream sound more like in the original surround mix by modifying the active set of loudspeakers for direct sound reproduction.

The method disables speakers from the output setup, such that the disabled speakers are between two other speakers of the output setup and the sequence of three adjacent output speakers lies in between two adjacent input speakers.

This has the effect that direct sounds which are originally reproduced as phantom sources with amplitude panning between two loudspeakers are also reproduced as phantom sources in the output speaker layout more often, since an extra physical speaker in the output speaker layout between two input speaker layout speakers is not used. This causes the timbral quality and spatial extent of the source to be closer to the original. However, the method also ensures that the output speaker setup is not made too sparse since only middle speakers from a block of three adjacent output speakers which lie in between a set of two input speakers is removed.

The following procedure is used to obtain the set of active speakers for direct sound reproduction according to the method:

If there are fewer or equal numbers of speakers in the output speaker layout than in the input speaker layout, the procedure is stopped and no modifications are done to the direct stream synthesis.

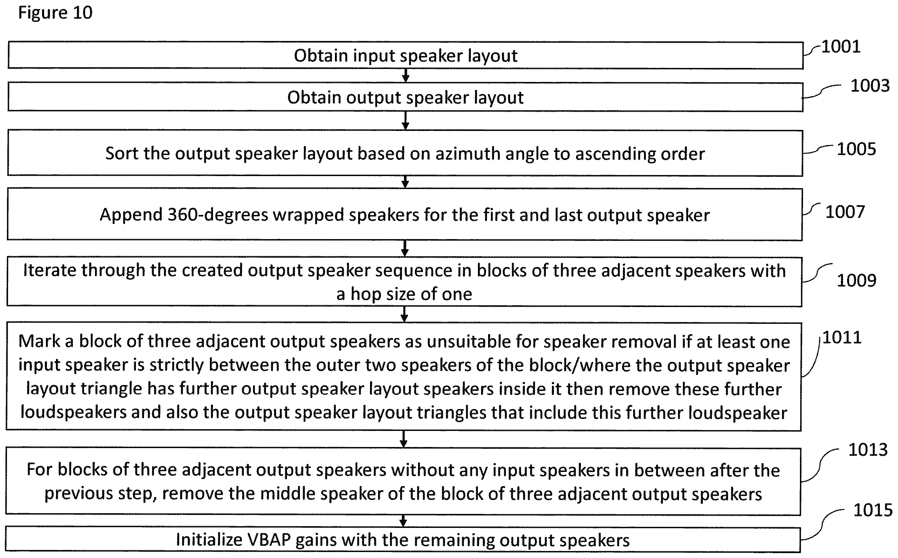

If there are more speakers in the output speaker layout than in the input speaker layout, the following steps are executed as shown with respect to Figure 10, which shows an example flow diagram of the operation of determining active output speakers for the direct part.

An operation is the obtaining or receiving the input speaker layout as shown in Figure 10 by step 1001.

Another operation is the obtaining or receiving the output speaker layout as shown in Figure 10 by step 1003.

The output speaker layout is sorted based on azimuth angle to ascending order as shown in Figure 10 by step 1005.

The 360-degrees wrapped speakers are appended for the first and last output speaker (last_speaker_azimuth - 360, first_speaker_azimuth + 360) as shown in Figure 10 by step 1007.

The method then iterates through the created output speaker sequence in blocks of three adjacent speakers with a hop size of one as shown in Figure 10 by step 1009.

A block of three adjacent output speakers is marked as unsuitable for speaker removal if at least one input speaker is in between the outer two speakers of the block as shown in Figure 10 by step 1011. In this the definition of between is the inclusive between.

For blocks of three adjacent output speakers without any input speakers in between (as determined by the previous step), the method is configured to remove the middle speaker of the block of three adjacent output speakers as shown in Figure 10 by step 1013.

For example where the input speakers are at 30, -30, 110, -110 degrees and the output speakers are at 30, -30, 0, 110, -110 degrees then a speaker at an angle of 0 may be removed.

The VBAP gains may then be initialized with the remaining output speakers as shown in Figure 1015.

In other words the principle of the method is to iterate through the output in sets of three adjacent speakers. If there is at least one speaker from the input speaker layout in the middle of the three output speakers, then the block of three output speakers cannot reside in between two input speakers. Thus, no speakers can be removed from it.

The method may be extended to 3D loudspeaker setups. In some embodiments when applied to a 3D loudspeaker setup, the method is configured to only process the horizontal loudspeaker circle with the above method and leave the elevated speakers unprocessed.

In some embodiments a full version for 3D loudspeaker layouts may be one where the candidate output speakers for removal are determined by iterating through input speakers in pairs of two, for pairs that are connected in the input VBAP triangulation, finding the output speakers which lay in between, and if there are at least three speakers in inclusively between, remove the middle one from the set of three.

In some embodiments the VBAP gains with modified speaker layout for direct sound reproduction are used for panning the direct sound components.

In some embodiments to remove the need to calculate dot products in the decoder, binary masks can be precomputed so that they indicate, per known input/output combinations, the set of active output speakers.

In some embodiments the modified speaker layout for direct sound reproduction is used as the output speaker layout for the diffuse part.

In some embodiments a version of direct sound reproduction for 3D loudspeaker setups can be implemented along with the VBAP triangulation step. The VBAP triangulation is the process of finding for each azimuth and elevation direction the set of three loudspeakers which are to be used for gain calculation.

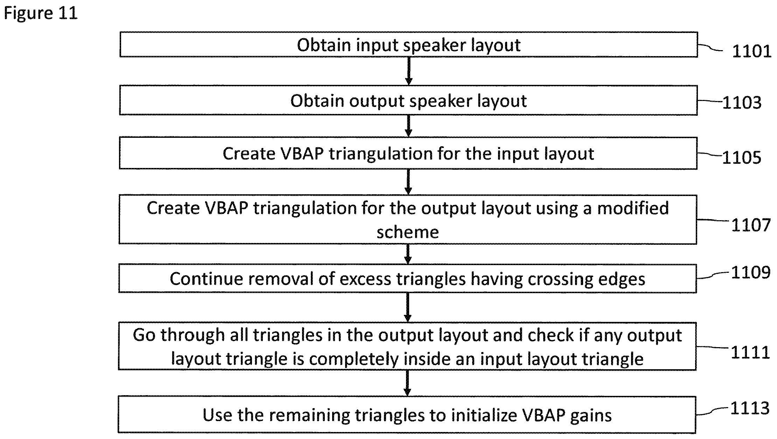

With respect to Figure 11 the method of the combined direct sound reproduction for 3D loudspeaker setups with the VBAP triangulation operation may comprise the following method.

An operation is the obtaining or receiving the input speaker layout as shown in Figure 11 by step 1101.

Another operation is the obtaining or receiving the output speaker layout as shown in Figure 11 by step 1103.

The creation of a VBAP triangulation based on the input loudspeaker layout is shown by Figure 11 by step 1105. Although VBAP triangulation is described herein it may be discussed more generally the creation of a suitable virtual surface or polygon arrangement.

Then the creation of a VBAP triangulation (or virtual surface arrangement) for the output speaker layout using the following modified scheme is shown in Figure 11 by step 1107. This may be achieved by before any other triangle (or polygon) reduction, for each triangle (or polygon), check if it matches input speaker layout exactly or within tolerance and set to keep triangles that match input speaker layout triangles and then remove all loudspeakers from the output speaker layout that are inside the kept triangle, i.e., remove all triangles involving a loudspeaker inside the kept triangle.

The removal of triangles is continued for any triangles having crossing edges as shown in Figure 11 by step 1109.

In some embodiments a further method may be to:

1) Check input triangles, if the corners of a triangle match three loudspeakers well (within tolerance, e.g., one degree) in output speaker layout

2) If yes, make a triangle of these loudspeakers and check if there are output loudspeakers inside this triangle, and remove them (from VBAP initialization)

3) When done for all input triangles, use remaining output loudspeakers to

initialize VBAP, i.e., perform the triangulation by any suitable method. This may be considered to be an alternative to steps 1107 and 1109.

The method may then examine all triangles in the output speaker layout and check if any output speaker layout triangle is completely inside an input speaker layout triangle. Where the output speaker layout triangle has further output speaker layout speakers inside it then remove these further speakers and also the output speaker layout triangles that include this further speaker as shown in Figure 11 by step 1111.

The remaining triangles may then be used to initialize the VBAP gains as shown in Figure 11 by step 1113.

In some embodiments, output speaker layout speaker nodes may be disabled from diffuse part gain determination using a further method:

1. Create input speaker layout triangles

2. Check input triangles, if the corners of a triangle match three loudspeakers well (within tolerance, e.g., one degree) in output speaker layout

3. If yes, make a triangle of these loudspeakers and check if there are output loudspeakers inside this triangle, and remove them from diffuse part gain determination

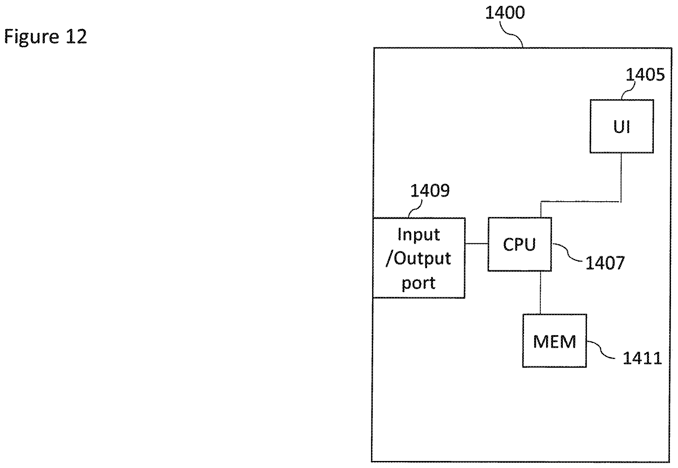

With respect to Figure 12 an example electronic device which may be used as the analysis or synthesis device is shown. The device may be any suitable electronics device or apparatus. For example in some embodiments the device 1400 is a mobile device, user equipment, tablet computer, computer, audio playback apparatus, etc.

In some embodiments the device 1400 comprises at least one processor or central processing unit 1407. The processor 1407 can be configured to execute various program codes such as the methods such as described herein.

In some embodiments the device 1400 comprises a memory 1411. In some embodiments the at least one processor 1407 is coupled to the memory 1411. The memory 1411 can be any suitable storage means. In some embodiments the memory 1411 comprises a program code section for storing program codes implementable upon the processor 1407. Furthermore in some embodiments the memory 1411 can further comprise a stored data section for storing data, for example data that has been processed or to be processed in accordance with the embodiments as described herein. The implemented program code stored within the program code section and the data stored within the stored data section can be retrieved by the processor 1407 whenever needed via the memory-processor coupling.

In some embodiments the device 1400 comprises a user interface 1405. The user interface 1405 can be coupled in some embodiments to the processor 1407. In some embodiments the processor 1407 can control the operation of the user interface 1405 and receive inputs from the user interface 1405. In some embodiments the user interface 1405 can enable a user to input commands to the device 1400, for example via a keypad. In some embodiments the user interface 1405 can enable the user to obtain information from the device 1400. For example the user interface 1405 may comprise a display configured to display information from the device 1400 to the user. The user interface 1405 can in some embodiments comprise a touch screen or touch interface capable of both enabling information to be entered to the device 1400 and further displaying information to the user of the device 1400. In some embodiments the user interface 1405 may be the user interface for communicating with the position determiner as described herein.

In some embodiments the device 1400 comprises an input/output port 1409. The input/output port 1409 in some embodiments comprises a transceiver. The transceiver in such embodiments can be coupled to the processor 1407 and configured to enable a communication with other apparatus or electronic devices, for example via a wireless communications network. The transceiver or any suitable transceiver or transmitter and/or receiver means can in some embodiments be configured to communicate with other electronic devices or apparatus via a wire or wired coupling.

The transceiver can communicate with further apparatus by any suitable known communications protocol. For example in some embodiments the transceiver can use a suitable universal mobile telecommunications system (UMTS) protocol, a wireless local area network (WLAN) protocol such as for example IEEE 802.X, a suitable short-range radio frequency communication protocol such as Bluetooth, or infrared data communication pathway (IRDA).

The transceiver input/output port 1409 may be configured to receive the signals and in some embodiments determine the parameters as described herein by using the processor 1407 executing suitable code. Furthermore the device may generate a suitable downmix signal and parameter output to be transmitted to the synthesis device.

In some embodiments the device 1400 may be employed as at least part of the synthesis device. As such the input/output port 1409 may be configured to receive the downmix signals and in some embodiments the parameters determined at the capture device or processing device as described herein, and generate a suitable audio signal format output by using the processor 1407 executing suitable code. The input/output port 1409 may be coupled to any suitable audio output for example to a multichannel speaker system and/or headphones or similar.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analogue and/or digital circuitry) and
(b) combinations of hardware circuits and software, such as (as applicable):

(i) a combination of analogue and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, the matter for which protection is sought is unique defined by the appended claims.

**Claims**

1. An apparatus (1400) for spatial audio signal decoding associated with a plurality of speaker nodes placed within a three-dimensional space, the apparatus configured to:

   receive at least one associated audio signal (300), the associated audio signal based on a defined speaker layout audio signal; spatial metadata associated with the associated audio signal (306) (308); at least one parameter representing a defined speaker layout associated with the defined speaker layout audio signal (304); and at least one parameter representing an output speaker layout (452);
   synthesize (309) from the at least one associated audio signal at least one output audio signal based on the spatial metadata and the at least one parameter representing the defined speaker layout and the at least one parameter representing an output speaker layout, wherein the apparatus, when configured to synthesize from the at least one associated audio signal at least one output audio signal based on the spatial metadata and the at least one parameter representing the defined speaker layout and the at least one parameter representing an output speaker layout, is further configured to:

      divide the at least one associated audio signal into a direct part and diffuse part based on the spatial metadata;
      synthesize a direct audio signal based on the direct part of the at least one associated audio signal (411) (403) (415) (407);
      synthesize a diffuse audio signal based on the diffuse part of the at least one associated audio signal (405) (413) (419) (417); and
      combine the direct audio signal and diffuse audio signal to generate the at least one output audio signal (421), wherein at least one of the synthesis of the direct audio signal and/or synthesis of the diffuse audio signal is based on the at least one parameter representing the defined speaker layout (304) and the at least one parameter representing an output speaker layout (452).

2. The apparatus as claimed in claim 1, wherein the apparatus configured to synthesize a diffuse audio signal based on the diffuse part of the at least one associated audio signal is configured to:

   decorrelate (419) the at least one associated audio signal;
   generate a set of gains for each output speaker layout (423), the gains based on matching a total diffuse part energy distribution with the input speaker layout and output speaker layout.

3. The apparatus as claimed in claim 2, wherein the apparatus configured to generate a set of gains (423) for each of the output speaker layout (452), the gains based on matching a total diffuse part energy distribution with the input speaker layout and output speaker layout is configured to:

   determine output speaker layout locations (701);
   determine absolute sums for x-axis components of speaker nodes based on the output speaker layout locations (703);
   determine normalized x-axis components of speaker nodes (705);
   determine a x-axis component correction based on the normalised x-components (707);

determine x-axis component corrected energy factors based on the x-component correction (709); and
determine the set of gains for each output speaker nodes (711).

4.  The apparatus as claimed in claim 2, wherein the apparatus configured to generate a set of gains (423) for each of the output speaker layout (452), the gains based on matching a total diffuse part energy distribution with the input speaker layout and output speaker layout is configured to:

>   determine output speaker layout vectors based on the output speaker layout (903);
>   determine input speaker layout vectors based on the input speaker layout (901);
>   set an initial energy factor based on the inverse of a number of output speaker nodes (905);
>   form a target vector based on an energy-factor weighted sum vector of input speaker layout vectors (907);
>   optimize the energy factors such that an energy-factor weighted sum vector of output speaker layout vectors matches the target vector (909);
>   remove any negative values from the optimized energy factors (911);
>   normalize the sum of remaining optimized energy factors to unity (911); and
>   determine the set of gains from the normalized remaining optimized energy factors (913).

5.  The apparatus as claimed in any of claims 1 to 4, wherein the apparatus configured to synthesize (405) (413) (419) (417) a diffuse audio signal based on the diffuse part of the at least one associated audio signal is configured to: determine and disable speaker nodes from the output speaker layout, such that the disabled speaker nodes are located between two other speaker nodes of the output speaker layout and the sequence of three adjacent output speaker nodes lie inclusively between two adjacent input speaker nodes.

6.  The apparatus as claimed in any of claims 1 to 5, wherein the apparatus configured to synthesize (411) (403) (415) (407) a direct audio signal based on the direct part (409) of the at least one associated audio signal is configured to: determine and disable speaker nodes from the output speaker layout, such that the disabled speaker nodes are located between two other speaker nodes of the output speaker layout and the sequence of three adjacent output speaker nodes lie inclusively between two adjacent input speaker nodes.

7.  The apparatus as claimed in any of claims 5 and 6, wherein the apparatus configured to determine and disable speaker nodes from the output speaker layout, such that the disabled speaker nodes are located between two other speaker nodes of the output speaker layout and the sequence of three adjacent output speaker nodes lie in between two adjacent input speaker nodes is configured to:

>   determine whether there are more speakers in the output speaker layout than in the input speaker layout;
>   sort the output speaker layout based on azimuth angle to generate a sorted list (1005);
>   append a first and last output speaker according to the sorting to the end of the sorted list and the start of the sorted list respectively(1007);
>   iterate through the appended sorted list in blocks of three adjacent speakers with a hop size of one (1009);
>   keep a block of three adjacent output speakers where at least one input speaker is located in between the outer two speakers of the block (1011); and
>   remove a middle of a block of three adjacent output speakers where there are no input speakers in between the outer two speakers of the block (1013).

8.  The apparatus as claimed in claim 7, wherein the apparatus configured to
    sort the output speaker layout based on azimuth angle to generate a sorted list is caused to sort only horizontal orientation output speakers.

9.  The apparatus as claimed in any of claims 1 to 4, wherein the apparatus configured to synthesize (411) (403) (415) (407) a direct audio signal based on the direct part of the at least one associated audio signal is configured to:

>   create an input speaker layout vector base amplitude panning virtual surface arrangement based on the input speaker layout (1105);
>   create an output speaker layout vector base amplitude panning virtual surface arrangement based on the output speaker layout (1107);
>   examine any virtual surfaces based on the output speaker layout vector base amplitude panning virtual surface arrangement matching at least one virtual surface of the input speaker layout vector base amplitude panning virtual surface arrangement and remove all virtual surfaces of the output speaker layout vector base amplitude panning virtual surface arrangement which involve a speaker inside the matching virtual surface (1109);

examine any virtual surfaces based on the output layout and remove virtual surface if completely inside an input layout virtual surface (1111);

remove any speaker where the output layout virtual surface has further speakers inside to generate a reduced speaker virtual surface arrangement; and

generate vector base amplitude panning based on the kept output speaker layout vector base virtual surfaces (1113).

10. The apparatus as claimed in any of claims 1 to 4, wherein the apparatus configured to synthesize (411) (403) (415) (407) a direct audio signal based on the direct part of the at least one associated audio signal is configured to:

create an input speaker layout vector base amplitude panning virtual surface arrangement based on the input speaker layout;

examine any output speaker layout speaker nodes matching at least one node within the virtual surface of the input speaker layout vector base amplitude panning virtual surface arrangement and remove all output speaker layout speaker nodes which are not part of the input speaker layout vector base amplitude panning virtual surface arrangement but are located inside of the input speaker layout vector base amplitude panning virtual surface arrangement;

create an output speaker layout vector base amplitude panning virtual surface arrangement based on the remaining output speaker layout speaker nodes;

examine any virtual surfaces based on the output layout and remove virtual surface if completely inside an input layout virtual surface;

remove any speaker where the output layout virtual surface has further speakers inside to generate a reduced speaker virtual surface arrangement; and

generate vector base amplitude panning based on the kept output speaker layout vector base virtual surfaces.

11. The apparatus as claimed in any of claims 1 to 4, wherein the apparatus configured to synthesize (405) (413) (419) (417) a diffuse audio signal based on the diffuse part of the at least one associated audio signal is configured to:

create an input speaker layout vector base amplitude panning virtual surface arrangement based on the input speaker layout;

examine any output speaker layout speaker nodes matching at least one node within the virtual surface of the input speaker layout vector base amplitude panning virtual surface arrangement and remove all output speaker layout speaker nodes which are not part of the input speaker layout vector base amplitude panning virtual surface arrangement but are located inside of the input speaker layout vector base amplitude panning virtual surface arrangement.

12. A method for spatial audio signal decoding (365) associated with a plurality of speaker nodes placed within a three-dimensional space, the method comprising:

receiving (471) at least one associated audio signal, the associated audio signal based on a defined speaker layout audio signal; spatial metadata associated with the associated audio signal; at least one parameter representing a defined speaker layout associated with the defined speaker layout audio signal; and at least one parameter representing an output speaker layout; and

synthesizing from the at least one associated audio signal at least one output audio signal based on the spatial metadata and the at least one parameter representing the defined speaker layout and the at least one parameter representing an output speaker layout, wherein the step of synthesizing from the at least one associated audio signal at least one output audio signal based on the spatial metadata and the at least one parameter representing the defined speaker layout and the at least one parameter representing an output speaker layout further comprises

dividing the at least one associated audio signal into a direct part and diffuse part based on the spatial metadata;

synthesizing a direct audio signal based on the direct part of the at least one associated audio signal (473) (479) (483);

synthesizing a diffuse audio signal based on the diffuse part of the at least one associated audio signal (477)(481)(485); and

combining the direct audio signal and diffuse audio signal to generate the at least one output audio signal, wherein at least one of the synthesizing of the direct audio signal and/or synthesizing of the diffuse audio signal is based on the at least one parameter representing the defined speaker layout and the at least one parameter representing an output speaker layout (487).

13. The method as claimed in claim 12, wherein synthesizing a diffuse audio signal based on the diffuse part of the at least one associated audio signal comprises:

decorrelating the at least one associated audio signal (481);
generating a set of gains for each output speaker layout, the gains based on matching a total diffuse part energy distribution with the input speaker layout and output speaker layout (477).

**Patentansprüche**

1. Vorrichtung (1400) zur räumlichen Audiosignaldecodierung, die einer Vielzahl von Lautsprecherknoten zugehörig ist, die in einem dreidimensionalen Raum angeordnet sind, wobei die Vorrichtung konfiguriert ist zum:

Empfangen mindestens eines zugehörigen Audiosignals (300), wobei das zugehörige Audiosignal auf einem Audiosignal eines definierten Lautsprecherlayouts basiert; räumlicher Metadaten, die dem zugehörigen Audiosignal (306) (308) zugehörig sind; mindestens eines Parameters, der ein definiertes Lautsprecherlayout darstellt, das dem Audiosignal (304) eines definierten Lautsprecherlayouts zugehörig ist; und mindestens eines Parameters, der ein Ausgangslautsprecherlayout (452) darstellt;
Synthetisieren (309), aus dem mindestens einen zugehörigen Audiosignal, mindestens eines Ausgangsaudiosignals basierend auf den räumlichen Metadaten und dem mindestens einen Parameter, der das definierte Lautsprecherlayout darstellt, und dem mindestens einen Parameter, der ein Ausgangslautsprecherlayout darstellt, wobei die Vorrichtung, wenn sie so konfiguriert ist, dass sie aus dem mindestens einen zugehörigen Audiosignal mindestens ein Ausgangsaudiosignal basierend auf den räumlichen Metadaten und dem mindestens einen Parameter, der das definierte Lautsprecherlayout darstellt, und dem mindestens einen Parameter, der ein Ausgangslautsprecherlayout darstellt, synthetisiert ferner konfiguriert ist zum:

Aufteilen des mindestens einen zugehörigen Audiosignals basierend auf den räumlichen Metadaten in einen direkten Teil und einen diffusen Teil;
Synthetisieren eines direkten Audiosignals basierend auf dem direkten Teil des mindestens einen zugehörigen Audiosignals (411) (403) (415) (407);
Synthetisieren eines diffusen Audiosignals basierend auf dem diffusen Teil des mindestens einen zugehörigen Audiosignals (405) (413) (419) (417); und
Kombinieren des direkten Audiosignals und des diffusen Audiosignals, um das mindestens eine Ausgangsaudiosignal (421) zu erzeugen, wobei mindestens eine von der Synthese des direkten Audiosignals und/oder der Synthese des diffusen Audiosignals auf dem mindestens einen Parameter, der das definierte Lautsprecherlayout (304) darstellt, und dem mindestens einen Parameter, der ein Ausgangslautsprecherlayout (452) darstellt, basiert.

2. Vorrichtung nach Anspruch 1, wobei die Vorrichtung, die konfiguriert ist, um ein diffuses Audiosignal basierend auf dem diffusen Teil des mindestens einen zugehörigen Audiosignals zu synthetisieren, konfiguriert ist zum:

Dekorrelieren (419) des mindestens einen zugehörigen Audiosignals;
Erzeugen eines Satzes von Verstärkungen für jedes Ausgangslautsprecherlayout (423), wobei die Verstärkungen auf dem Abgleich einer gesamten Energieverteilung des diffusen Teils mit dem Eingangslautsprecherlayout und dem Ausgangslautsprecherlayout basieren.

3. Vorrichtung nach Anspruch 2, wobei die Vorrichtung, die konfiguriert ist zum Erzeugen eines Satzes von Verstärkungen (423) für jedes Ausgangslautsprecherlayout (452), wobei die Verstärkungen auf dem Abgleich einer gesamten Energieverteilung des diffusen Teils mit dem Eingangslautsprecherlayout und dem Ausgangslautsprecherlayout basieren, konfiguriert ist zum:

Bestimmen der Positionen des Ausgangslautsprecherlayouts (701);
Bestimmen der absoluten Summen für die x-Achsen-Komponenten von Lautsprecherknoten basierend auf den Positionen des Ausgangslautsprecherlayouts (703);
Bestimmen normalisierter x-Achsen-Komponenten von Lautsprecherknoten (705); Bestimmen einer x-Achsen-Komponenten-Korrektur basierend auf den normalisierten x-Komponenten (707);

Bestimmen der x-Achsen-korrigierten Energiefaktoren basierend auf der x-Komponenten-Korrektur (709); und Bestimmen des Satzes von Verstärkungen für jeden Ausgangslautsprecherknoten (711).

4. Vorrichtung nach Anspruch 2, wobei die Vorrichtung, die konfiguriert ist zum Erzeugen eines Satzes von Verstärkungen (423) für jedes Ausgangslautsprecherlayout (452), wobei die Verstärkungen auf dem Abgleich einer gesamten Energieverteilung des diffusen Teils mit dem Eingangslautsprecherlayout und dem Ausgangslautsprecherlayout basieren, konfiguriert ist zum:

Bestimmen von Ausgangslautsprecherlayout-Vektoren basierend auf dem Ausgangslautsprecherlayout (903); Bestimmen von Eingangslautsprecherlayout-Vektoren basierend auf dem Eingangslautsprecherlayout (901); Einstellen eines anfänglichen Energiefaktors basierend auf dem Kehrwert einer Anzahl von Ausgangslautsprecherknoten (905); Bilden eines Zielvektors basierend auf einem energiefaktorgewichteten Summenvektor der Eingangslautsprecherlayout-Vektoren (907); Optimieren der Energiefaktoren derart, dass ein energiefaktor-gewichteter Summenvektor von Ausgangslautsprecherllayout-Vektoren mit dem Zielvektor übereinstimmt (909); Entfernen aller negativen Werte aus den optimierten Energiefaktoren (911); Normalisieren der Summe der verbleibenden optimierten Energiefaktoren auf Eins (911); und Bestimmen des Satzes von Verstärkungen anhand der normalisierten verbleibenden optimierten Energiefaktoren (913).

5. Vorrichtung nach einem der Ansprüche 1 bis 4, wobei die Vorrichtung, die konfiguriert ist, um ein diffuses Audiosignal basierend auf dem diffusen Teil des mindestens einen zugehörigen Audiosignals zu synthetisieren (405) (413) (419) (417), konfiguriert ist zum:
Bestimmen und Deaktivieren von Lautsprecherknoten aus dem Ausgangslautsprecherlayout, so dass sich die deaktivierten Lautsprecherknoten zwischen zwei anderen Lautsprecherknoten des Ausgangslautsprecherlayouts befinden und die Folge von drei benachbarten Ausgangslautsprecherknoten inklusiv zwischen zwei benachbarten Eingangslautsprecherknoten liegt.

6. Vorrichtung nach einem der Ansprüche 1 bis 5, wobei die Vorrichtung, die konfiguriert ist, um ein direktes Audiosignal basierend auf dem direkten Teil (409) des mindestens einen zugehörigen Audiosignals zu synthetisieren (411) (403) (415) (407), konfiguriert ist zum:
Bestimmen und Deaktivieren von Lautsprecherknoten aus dem Ausgangslautsprecher-Layout, so dass sich die deaktivierten Lautsprecherknoten zwischen zwei anderen Lautsprecherknoten des Ausgangslautsprecher-Layouts befinden und die Folge von drei benachbarten Ausgangslautsprecherknoten inklusiv zwischen zwei benachbarten Eingangslautsprecherknoten liegt.

7. Vorrichtung nach einem der Ansprüche 5 und 6, wobei die Vorrichtung, die konfiguriert ist, um Lautsprecherknoten aus dem Ausgangslautsprecherlayout zu bestimmen und zu deaktivieren, so dass sich die deaktivierten Lautsprecherknoten zwischen zwei anderen Lautsprecherknoten des Ausgangslautsprecherlayouts befinden und die Folge von drei benachbarten Ausgangslautsprecherknoten zwischen zwei benachbarten Eingangslautsprecherknoten liegt, konfiguriert ist zum:

Ermitteln, ob es in dem Ausgangslautsprecherlayout mehr Lautsprecher gibt als in dem Eingangslautsprecherlayout; Sortieren des Ausgangslautsprecherlayouts basierend auf dem Azimutwinkel, um eine sortierte Liste zu erstellen (1005); Anhängen eines ersten und eines letzten Ausgangslautsprechers entsprechend der Sortierung an das Ende der sortierten Liste bzw. an den Anfang der sortierten Liste (1007); wiederholten Durchlaufen der angehängten sortierten Liste in Blöcken von drei benachbarten Lautsprechern mit einer Sprungweite von eins (1009); Behalten eines Block von drei benachbarten Ausgangslautsprechern, wobei sich mindestens ein Eingangslautsprecher zwischen den beiden äußeren Lautsprechern des Blocks befindet (1011); und Entfernen einer Mitte eines Blocks von drei benachbarten Ausgangslautsprechern, wenn sich zwischen den beiden äußeren Lautsprechern des Blocks keine Eingangslautsprecher befinden (1013).

8. Vorrichtung nach Anspruch 7, wobei die Vorrichtung, die konfiguriert ist, um das Ausgangslautsprecherlayout basierend auf dem Azimutwinkel zu sortieren, um eine sortierte Liste zu erzeugen, veranlasst wird, nur die Ausgangslautsprecher mit horizontaler Ausrichtung zu sortieren.

9. Vorrichtung nach einem der Ansprüche 1 bis 4, wobei die Vorrichtung, die konfiguriert ist, um ein direktes Audiosignal basierend auf dem direkten Teil des mindestens einen zugehörigen Audiosignals zu synthetisieren (411) (403) (415) (407), konfiguriert ist zum:

Erzeugen einer virtuellen Eingangslautsprecherlayout-VBAP-Oberflächenanordnung (Vector Base Amplitude Panning, VBAP) basierend auf dem Eingangslautsprecherlayout (1105);
Erzeugen einer virtuellen Ausgangslautsprecherlayout-VBAP-Oberflächenanordnung basierend auf dem Ausgangslautsprecherlayout (1107);
Untersuchen aller virtuellen Oberflächen, die auf der virtuellen Ausgangslautsprecher-VBAP-Oberflächenanordnung basieren, die mit mindestens einer virtuellen Oberfläche der Eingangslautsprecherlayout-VBAP-Oberflächenanordnung übereinstimmen, und Entfernen aller virtuellen Oberflächen der virtuellen Ausgangslautsprecherlayout-VBAP-Oberflächenanordnung, die einen Lautsprecher innerhalb der übereinstimmenden virtuellen Oberfläche enthalten (1109);
Untersuchen aller virtuellen Oberflächen basierend auf dem Ausgangslayout und Entfernen der virtuellen Oberfläche, wenn sie vollständig innerhalb einer virtuellen Oberfläche des Eingangslayouts liegt (1111);
Entfernen jedes Lautsprechers, wo die virtuelle Oberfläche des Ausgangslayouts weitere Lautsprecher enthält, um eine reduzierte virtuelle Lautsprecher-Oberflächenanordnung zu erzeugen; und
Erzeugen eines Vector Base Amplitude Panning basierend auf den beibehaltenen virtuellen Ausgnagslautsprecherlayout-Vektor-Basis-Oberflächen (1113).

10. Vorrichtung nach einem der Ansprüche 1 bis 4, wobei die Vorrichtung, die konfiguriert ist, um ein direktes Audiosignal basierend auf dem direkten Teil des mindestens einen zugehörigen Audiosignals zu synthetisieren (411) (403) (415) (407), konfiguriert ist zum:

Erzeugen einer virtuellen Eingangslautsprecherlayout-VBAP-Oberflächenanordnung basierend auf dem Eingangslautsprecherlayout;
Untersuchen aller Ausgangslautsprecherlayout-Lautsprecherknoten, die mit mindestens einem Knoten innerhalb der virtuellen Oberfläche der virtuelllen Eingangslautsprecherlayout-VBAP-Oberflächenanordnung übereinstimmen, und Entfernen aller Ausgangslautsprecherlayout-Lautsprecherknoten, die nicht Teil der virtuellen Eingangslautsprecherlayout-VBAP-Oberflächenanordnung sind, sondern sich innerhalb der virtuellen Eingangslautsprecherlayout-VBAP-Oberflächenanordnung befinden;
Erzeugen einer virtuellen Ausgangslautsprecherlayout-VBAP-Oberflächenanordnung basierend auf den verbleibenden Ausgangslautsprecherlayout-Lautsprecherknoten;
Untersuchen aller virtuellen Oberflächen basierend auf dem Ausgangslayout und Entfernen der virtuellen Oberfläche, wenn sie vollständig innerhalb einer virtuellen Eingangslayout-Oberfläche liegt;
Entfernen jedes Lautsprechers, wo die virtuelle Oberfläche des Ausgangslayouts weitere Lautsprecher enthält, um eine reduzierte virtuelle Lautsprecher-Oberflächenanordnung zu erzeugen; und
Erzeugen eines Vector Base Amplitude Panning basierend auf den beibehaltenen virtuellen Ausgangslautsprecherlayout-Vektor-Basis-Oberflächen.

11. Vorrichtung nach einem der Ansprüche 1 bis 4, wobei die Vorrichtung, die konfiguriert ist, um ein diffuses Audiosignal basierend auf dem diffusen Teil des mindestens einen zugehörigen Audiosignals zu synthetisieren (405) (413) (419) (417), konfiguriert ist zum:

Erzeugen einer virtuellen Eingangslautsprecherlayout-VBAP-Oberflächenanordnung basierend auf dem Eingangslautsprecherlayout;
Untersuchen aller Ausgangslautsprecherlayout-Lautsprecherknoten, die mit mindestens einem Knoten innerhalb der virtuellen Oberfläche der virtuellen Eingangslautsprecherlayout-VBAP-Oberflächenanordnung übereinstimmen, und Entfernen aller Ausgangslautsprecherlayout-Lautsprecherknoten, die nicht Teil der virtuellen Eingangslautsprecherlayout-VBAP-Oberflächenanordnung sind, sondern sich innerhalb der virtuellen Eingangslautsprecherlayout-VBAP-Oberflächenanordnung befinden.

12. Verfahren zur räumlichen Audiosignaldecodierung (365), die einer Vielzahl von Lautsprecherknoten zugehörig ist, die in einem dreidimensionalen Raum angeordnet sind, wobei das Verfahren Folgendes umfasst:

Empfangen (471) mindestens eines zugehörigen Audiosignals, wobei das zugehörige Audiosignal auf einem Audiosignal eines definierten Lautsprecherlayouts basiert; räumlicher Metadaten, die dem zugehörigen Audiosignal zugehörig sind; mindestens eines Parameters, der ein definiertes Lautsprecherlayout darstellt, das dem Audiosignal eines definierten Lautsprecherlayouts zugehörig ist; und mindestens eines Parameters, der ein Ausgangslautsprecherlayout darstellt; und

Synthetisieren, aus dem mindestens einen zugehörigen Audiosignal, mindestens eines Ausgangsaudiosignals basierend auf den räumlichen Metadaten und dem mindestens einen Parameter, der das definierte Lautsprecherlayout darstellt, und dem mindestens einen Parameter, der ein Ausgangslautsprecherlayout darstellt, wobei der Schritt des Synthetisierens, aus dem mindestens einen zugehörigen Audiosignal, mindestens eines Ausgangsaudiosignals basierend auf den räumlichen Metadaten und dem mindestens einen Parameter, der das definierte Lautsprecherlayout darstellt, und dem mindestens einen Parameter, der ein Ausgangslautsprecherlayout darstellt, ferner Folgendes umfasst:

Aufteilen des mindestens einen zugehörigen Audiosignals basierend auf den räumlichen Metadaten in einen direkten Teil und einen diffusen Teil;
Synthetisieren eines direkten Audiosignals basierend auf dem direkten Teil des mindestens einen zugehörigen Audiosignals (473) (479) (483);
Synthetisieren eines diffusen Audiosignals basierend auf dem diffusen Teil des mindestens einen zugehörigen Audiosignals (477) (481) (485); und
Kombinieren des direkten Audiosignals und des diffusen Audiosignals, um das mindestens eine Ausgangsaudiosignal zu erzeugen, wobei mindestens eines von dem Synthetisieren des direkten Audiosignals und/oder dem Synthetisieren des diffusen Audiosignals auf dem mindestens einen Parameter, der das definierte Lautsprecherlayout darstellt, und dem mindestens einen Parameter, der ein Ausgangslautsprecherlayout darstellt, basiert (487).

13. Verfahren nach Anspruch 12, wobei das Synthetisieren eines diffusen Audiosignals basierend auf dem diffusen Teil des mindestens einen zugehörigen Audiosignals Folgendes umfasst:

Dekorrelieren des mindestens einen zugehörigen Audiosignals (481);
Erzeugen eines Satzes von Verstärkungen für jedes Ausgangslautsprecherlayout, wobei die Verstärkungen auf dem Abgleich einer gesamten Energieverteilung des diffusen Teils mit dem Eingangslautsprecherlayout und dem Ausgangslautsprecherlayout basieren (477).

**Revendications**

1. Appareil (1400) pour un décodage de signal audio spatial, associé à une pluralité de noeuds de haut-parleur placés au sein d'un espace tridimensionnel, l'appareil étant configuré pour :

recevoir au moins un signal audio associé (300), le signal audio associé étant basé sur un signal audio de disposition de haut-parleurs définie ; des métadonnées spatiales associées au signal audio associé (306) (308) ;
au moins un paramètre représentant une disposition de haut-parleurs définie associée au signal audio de disposition de haut-parleurs définie (304) ; et au moins un paramètre représentant une disposition de haut-parleurs de sortie (452) ;
synthétiser (309), à partir de l'au moins un signal audio associé, au moins un signal audio de sortie sur la base des métadonnées spatiales et de l'au moins un paramètre représentant la disposition de haut-parleurs définie et de l'au moins un paramètre représentant une disposition de haut-parleurs de sortie,
dans lequel l'appareil, lorsqu'il est configuré pour synthétiser, à partir de l'au moins un signal audio associé, au moins un signal audio de sortie sur la base des métadonnées spatiales et de l'au moins un paramètre représentant la disposition de haut-parleurs définie et de l'au moins un paramètre représentant une disposition de haut-parleurs de sortie, est en outre configuré pour :

diviser l'au moins un signal audio associé en une partie directe et une partie diffuse sur la base des métadonnées spatiales ;
synthétiser un signal audio direct sur la base de la partie directe de l'au moins un signal audio associé (411) (403) (415) (407) ;
synthétiser un signal audio diffus sur la base de la partie diffuse de l'au moins un signal audio associé (405) (413) (419) (417) ; et
combiner le signal audio direct et le signal audio diffus pour générer l'au moins un signal audio de sortie (421), dans lequel au moins l'une parmi la synthèse du signal audio direct et/ou la synthèse du signal audio diffus est basée sur l'au moins un paramètre représentant la disposition de haut-parleurs définie (304) et sur l'au moins un paramètre représentant une disposition de haut-parleurs de sortie (452).

2. Appareil selon la revendication 1, dans lequel l'appareil configuré pour synthétiser un signal audio diffus sur la base de la partie diffuse de l'au moins un signal audio associé est configuré pour :

décorréler (419) l'au moins un signal audio associé ;
générer un ensemble de gains pour chaque disposition de haut-parleurs de sortie (423), les gains étant basés sur la concordance d'une distribution d'énergie de partie diffuse totale avec la disposition de haut-parleurs d'entrée et la disposition de haut-parleurs de sortie.

3. Appareil selon la revendication 2, dans lequel l'appareil configuré pour générer un ensemble de gains (423) pour chaque disposition de haut-parleurs de sortie (452), les gains étant basés sur la concordance d'une distribution d'énergie de partie diffuse totale avec la disposition de haut-parleurs d'entrée et la disposition de haut-parleurs de sortie, est configuré pour :

déterminer des emplacements de disposition de haut-parleurs de sortie (701) ;
déterminer des sommes absolues pour des composantes d'axe x de noeuds de haut-parleur sur la base des emplacements de disposition de haut-parleurs de sortie (703) ;
déterminer des composantes d'axe x normalisées de noeuds de haut-parleur (705) ;
déterminer une correction de composante d'axe x sur la base des composantes x normalisées (707) ;
déterminer des facteurs d'énergie corrigés en composante d'axe x sur la base de la correction de composante x (709) ; et
déterminer l'ensemble de gains pour chacun des noeuds de haut-parleur de sortie (711).

4. Appareil selon la revendication 2, dans lequel l'appareil configuré pour générer un ensemble de gains (423) pour chaque disposition de haut-parleurs de sortie (452), les gains étant basés sur la concordance d'une distribution d'énergie de partie diffuse totale avec la disposition de haut-parleurs d'entrée et la disposition de haut-parleurs de sortie, est configuré pour :

déterminer des vecteurs de disposition de haut-parleurs de sortie sur la base de la disposition de haut-parleurs de sortie (903) ;
déterminer des vecteurs de disposition de haut-parleurs d'entrée sur la base de la disposition de haut-parleurs d'entrée (901) ;
établir un facteur d'énergie initial sur la base de l'inverse d'un nombre de noeuds de haut-parleur de sortie (905) ;
former un vecteur cible sur la base d'un vecteur de somme pondérée par facteur d'énergie de vecteurs de disposition de haut-parleurs d'entrée (907) ;
optimiser les facteurs d'énergie de sorte qu'un vecteur de somme pondérée par facteur d'énergie de vecteurs de disposition de haut-parleurs de sortie concorde avec le vecteur cible (909) ;
éliminer toute valeur négative des facteurs d'énergie optimisés (911) ;
normaliser la somme de facteurs d'énergie optimisés restants à l'unité (911) ; et
déterminer l'ensemble de gains à partir des facteurs d'énergie optimisés restants normalisés (913).

5. Appareil selon l'une quelconque des revendications 1 à 4, dans lequel l'appareil configuré pour synthétiser (405) (413) (419) (417) un signal audio diffus sur la base de la partie diffuse de l'au moins un signal audio associé est configuré pour :
déterminer et désactiver des noeuds de haut-parleurs à partir de la disposition de haut-parleurs de sortie, de sorte que les noeuds de haut-parleur désactivés soient situés entre deux autres noeuds de haut-parleur de la disposition de haut-parleurs de sortie et que la séquence de trois noeuds de haut-parleur de sortie adjacents se trouve inclusivement entre deux noeuds de haut-parleur d'entrée adjacents.

6. Appareil selon l'une quelconque des revendications 1 à 5, dans lequel l'appareil configuré pour synthétiser (411) (403) (415) (407) un signal audio direct sur la base de la partie directe (409) de l'au moins un signal audio associé est configuré pour :
déterminer et désactiver des noeuds de haut-parleurs à partir de la disposition de haut-parleurs de sortie, de sorte que les noeuds de haut-parleur désactivés soient situés entre deux autres noeuds de haut-parleur de la disposition de haut-parleurs de sortie et que la séquence de trois noeuds de haut-parleur de sortie adjacents se trouve inclusivement entre deux noeuds de haut-parleur d'entrée adjacents.

7. Appareil selon l'une quelconque des revendications 5 et 6, dans lequel l'appareil configuré pour déterminer et désactiver des noeuds de haut-parleurs à partir de la disposition de haut-parleurs de sortie, de sorte que les noeuds de haut-parleur désactivés soient situés entre deux autres noeuds de haut-parleur de la disposition de haut-parleurs de sortie et que la séquence de trois noeuds de haut-parleur de sortie adjacents se trouve entre deux noeuds de haut-parleur d'entrée adjacents est configuré pour :

déterminer s'il y a davantage de haut-parleurs dans la disposition de haut-parleurs de sortie que dans la disposition de haut-parleurs d'entrée ;
trier la disposition de haut-parleurs de sortie sur la base d'un angle d'azimut pour générer une liste triée (1005) ;
adjoindre un premier et un dernier haut-parleur de sortie selon le tri à la fin de la liste triée et au début de la liste triée respectivement (1007) ;
parcourir par itérations la liste triée adjointe en blocs de trois haut-parleurs adjacents avec une taille de saut de un (1009) ;
conserver un bloc de trois haut-parleurs de sortie adjacents où au moins un haut-parleur d'entrée est situé entre les deux haut-parleurs externes du bloc (1011) ; et
éliminer un milieu d'un bloc de trois haut-parleurs de sortie adjacents où il n'y a pas de haut-parleurs d'entrée entre les deux haut-parleurs externes du bloc (1013).

8. Appareil selon la revendication 7, dans lequel l'appareil configuré pour trier la disposition de haut-parleurs de sortie sur la base d'un angle d'azimut pour générer une liste triée est amené à trier uniquement des haut-parleurs de sortie à orientation horizontale.

9. Appareil selon l'une quelconque des revendications 1 à 4, dans lequel l'appareil configuré pour synthétiser (411) (403) (415) (407) un signal audio direct sur la base de la partie directe de l'au moins un signal audio associé est configuré pour :

créer un agencement de surface virtuelle de panoramique d'amplitude de base de vecteur de disposition de haut-parleurs d'entrée sur la base de la disposition de haut-parleurs d'entrée (1105) ;
créer un agencement de surface virtuelle de panoramique d'amplitude de base de vecteur de disposition de haut-parleurs de sortie sur la base de la disposition de haut-parleurs de sortie (1107) ;
examiner toute surface virtuelle sur la base de l'agencement de surface virtuelle de panoramique d'amplitude de base de vecteur de disposition de haut-parleurs de sortie concordant avec au moins une surface virtuelle de l'agencement de surface virtuelle de panoramique d'amplitude de base de vecteur de disposition de haut-parleurs d'entrée et éliminer toutes les surfaces virtuelles de l'agencement de surface virtuelle de panoramique d'amplitude de base de vecteur de disposition de haut-parleurs de sortie qui impliquent un haut-parleur à l'intérieur de la surface virtuelle concordante (1109) ;
examiner toute surface virtuelle sur la base de la disposition de sortie et éliminer une surface virtuelle si elle est complètement à l'intérieur d'une surface virtuelle de disposition d'entrée (1111) ;
éliminer tout haut-parleur où la surface virtuelle de disposition de sortie possède des haut-parleurs supplémentaires à l'intérieur pour générer un agencement de surface virtuelle de haut-parleur réduit ; et
générer un panoramique d'amplitude de base de vecteur sur la base des surfaces virtuelles de base de vecteur de disposition de haut-parleurs de sortie conservées (1113).

10. Appareil selon l'une quelconque des revendications 1 à 4, dans lequel l'appareil configuré pour synthétiser (411) (403) (415) (407) un signal audio direct sur la base de la partie directe de l'au moins un signal audio associé est configuré pour :

créer un agencement de surface virtuelle de panoramique d'amplitude de base de vecteur de disposition de haut-parleurs d'entrée sur la base de la disposition de haut-parleurs d'entrée ;
examiner tout noeud de haut-parleur de disposition de haut-parleurs de sortie concordant avec au moins un noeud au sein de la surface virtuelle de l'agencement de surface virtuelle de panoramique d'amplitude de base de vecteur de disposition de haut-parleurs d'entrée et éliminer tous les noeuds de haut-parleur de disposition de haut-parleurs de sortie qui ne font pas partie de l'agencement de surface virtuelle de panoramique d'amplitude de base de vecteur de disposition de haut-parleurs d'entrée mais sont situés à l'intérieur de l'agencement de surface virtuelle de panoramique d'amplitude de base de vecteur de disposition de haut-parleurs d'entrée ;
créer un agencement de surface virtuelle de panoramique d'amplitude de base de vecteur de disposition de

haut-parleurs de sortie sur la base des noeuds de haut-parleur de disposition de haut-parleurs de sortie restants ;
examiner toute surface virtuelle sur la base de la disposition de sortie et éliminer une surface virtuelle si elle est complètement à l'intérieur d'une surface virtuelle de disposition d'entrée ;
éliminer tout haut-parleur où la surface virtuelle de disposition de sortie possède des haut-parleurs supplémentaires à l'intérieur pour générer un agencement de surface virtuelle de haut-parleur réduit ; et
générer un panoramique d'amplitude de base de vecteur sur la base des surfaces virtuelles de base de vecteur de disposition de haut-parleurs de sortie conservées.

**11.** Appareil selon l'une quelconque des revendications 1 à 4, dans lequel l'appareil configuré pour synthétiser (405) (413) (419) (417) un signal audio diffus sur la base de la partie diffuse de l'au moins un signal audio associé est configuré pour :

créer un agencement de surface virtuelle de panoramique d'amplitude de base de vecteur de disposition de haut-parleurs d'entrée sur la base de la disposition de haut-parleurs d'entrée ;
examiner tout noeud de haut-parleur de disposition de haut-parleurs de sortie concordant avec au moins un noeud au sein de la surface virtuelle de l'agencement de surface virtuelle de panoramique d'amplitude de base de vecteur de disposition de haut-parleurs d'entrée et éliminer tous les noeuds de haut-parleur de disposition de haut-parleurs de sortie qui ne font pas partie de l'agencement de surface virtuelle de panoramique d'amplitude de base de vecteur de disposition de haut-parleurs d'entrée mais sont situés à l'intérieur de l'agencement de surface virtuelle de panoramique d'amplitude de base de vecteur de disposition de haut-parleurs d'entrée.

**12.** Procédé pour un décodage de signal audio spatial (365), associé à une pluralité de noeuds de haut-parleur placés au sein d'un espace tridimensionnel, le procédé comprenant :

la réception (471) d'au moins un signal audio associé, le signal audio associé étant basé sur un signal audio de disposition de haut-parleurs définie ; de métadonnées spatiales associées au signal audio associé ; d'au moins un paramètre représentant une disposition de haut-parleurs définie associée au signal audio de disposition de haut-parleurs définie ; et d'au moins un paramètre représentant une disposition de haut-parleurs de sortie ; et
la synthèse, à partir de l'au moins un signal audio associé, d'au moins un signal audio de sortie sur la base des métadonnées spatiales et de l'au moins un paramètre représentant la disposition de haut-parleurs définie et de l'au moins un paramètre représentant une disposition de haut-parleurs de sortie,
dans lequel l'étape de la synthèse, à partir de l'au moins un signal audio associé, d'au moins un signal audio de sortie sur la base des métadonnées spatiales et de l'au moins un paramètre représentant la disposition de haut-parleurs définie et de l'au moins un paramètre représentant une disposition de haut-parleurs de sortie comprend en outre
la division de l'au moins un signal audio associé en une partie directe et une partie diffuse sur la base des métadonnées spatiales ;
la synthèse d'un signal audio direct sur la base de la partie directe de l'au moins un signal audio associé (473) (479) (483) ;
la synthèse d'un signal audio diffus sur la base de la partie diffuse de l'au moins un signal audio associé (477) (481) (485) ; et
la combinaison du signal audio direct et du signal audio diffus pour générer l'au moins un signal audio de sortie, dans lequel au moins l'une parmi la synthèse du signal audio direct et/ou la synthèse du signal audio diffus est basée sur l'au moins un paramètre représentant la disposition de haut-parleurs définie et sur l'au moins un paramètre représentant une disposition de haut-parleurs de sortie (487).

**13.** Procédé selon la revendication 12, dans lequel la synthèse d'un signal audio diffus sur la base de la partie diffuse de l'au moins un signal audio associé comprend :

la décorrélation de l'au moins un signal audio associé (481) ;
la génération d'un ensemble de gains pour chaque disposition de haut-parleurs de sortie, les gains étant basés sur la concordance d'une distribution d'énergie de partie diffuse totale avec la disposition de haut-parleurs d'entrée et la disposition de haut-parleurs de sortie (477).

Figure 1

Channel 3
103

Virtual Source
104

Active Triangle 105

Channel 2
102

Channel 1
101

Virtual Source
104

P

I3

I2

I1

100

EP 3 777 242 B1

Figure 2

Figure 3a

Transmission or storage
307

5.0 audio
300

**FOA format
(B-format)
converter**
301

FOA stream
302

**Spatial
analyser**
303

direction(s) and
ratio(s) ⟋ 308

306

**Synthesizer**

loudspeaker
signals
312

**Channel layout
parameter
determiner**
311

**Transport
signal
generator**
305

Transport signal

Transport signal
310

309

Channel layout
parameter 304

EP 3 777 242 B1

Figure 3b

receiving the loudspeaker audio signals (for example 5.0 format) — 351

determination of a channel layout parameter
(based on the received loudspeaker format audio signals or received along
with the received loudspeaker format audio signals) — 353

convert received loudspeaker format audio signals to FOA (B-format) stream — 355

Analyse FOA (B-format) stream to generate spatial metadata — 357

Generate transport audio signals from FOA stream — 359

(optionally) combine channel layout parameter, transport audio signals and
metadata to form a data stream — 361

transmit and receive (or store and retrieve) channel layout parameter,
transport audio signals and metadata (or the combined data stream) — 363

synthesize output audio signals based at least on the channel layout
parameter, transport audio signals and metadata — 365

EP 3 777 242 B1

Figure 4a

309

Direction 306

Ratio 308

Transport
audio signal
310

Input loudspeaker
layout parameter
304

Prototype
output signal
generator          401

sqrt(ratio)
Processor          403

sqrt(1-ratio)
Processor          405

VBAP          407

Active
speakers for
direct part
determiner          409

Enable/
disable          450

Output
loudspeaker
layout  452

411          413          415

Decorrelator          419          417          421

Diffuse part
gain
determiner          423

Enable/disable
450

Output
loudspeaker
layout 452

EP 3 777 242 B1

Figure 4b

receive transport audio signals, the metadata, the input loudspeaker parameter, the output loudspeaker parameter and enable/disable parameter — 471

Determine Active output speakers for direct part — 473

Generate prototype output signals — 475

Determine diffuse part gains — 477

Determine direct part — 479

Determine diffuse part audio signals — 481

Apply VBAP (based on active output speakers) — 483

Apply diffuse part gains — 485

Combine processed direct and processed diffuse parts to generate output audio signals — 487

output combined output audio signals — 489

EP 3 777 242 B1

Figure 5

Obtain output loudspeaker layout — 501

Is layout left-right uniform? — 503

no

yes

Elevation correction needed? — 505

507

Use Method 2 for diffuse stream

yes

no

509

Use Method 1 for diffuse stream

EP 3 777 242 B1

33

Figure 6

Sum vector
601

0 degrees
600

30 degrees
602

-30 degrees
604

Loudspeaker
vectors
610

110 degrees
606

-110 degrees
608

Figure 7

Obtain output speaker layout and create output speaker x-coordinates — 701

Calculate the abs-sums a and b for x-components of loudspeakers with positive and negative x-axis components, respectively — 703

Calculate normalized x-axis components — 705

Calculate the amount of x-axis correction needed — 707

Calculate x-axis corrected energy factors — 709

Calculate output loudspeaker gains as square root of energy factors — 711

509

EP 3 777 242 B1

Figure 8

EP 3 777 242 B1

Figure 9

507

Obtain input speaker layout and create input speaker vectors — 901

Obtain output speaker layout and create output speaker vectors — 903

Set initial energy factors to 1/number_of_loudspeakers — 905

Form a target vector based on energy-factor weighted sum vector of input speaker vectors — 907

Optimize output energy factors such that energy-factor weighted sum vector of output speaker vectors matches target vector — 909

Remove negative values from obtained output energy factors and normalize the sum to unity — 911

Calculate output loudspeaker gains as square root of energy factors — 913

Figure 10

| |
|---|
| Obtain input speaker layout — 1001 |

| |
|---|
| Obtain output speaker layout — 1003 |

| |
|---|
| Sort the output speaker layout based on azimuth angle to ascending order — 1005 |

| |
|---|
| Append 360-degrees wrapped speakers for the first and last output speaker — 1007 |

| |
|---|
| Iterate through the created output speaker sequence in blocks of three adjacent speakers with a hop size of one — 1009 |

| |
|---|
| Mark a block of three adjacent output speakers as unsuitable for speaker removal if at least one input speaker is strictly between the outer two speakers of the block/where the output speaker layout triangle has further output speaker layout speakers inside it then remove these further loudspeakers and also the output speaker layout triangles that include this further loudspeaker — 1011 |

| |
|---|
| For blocks of three adjacent output speakers without any input speakers in between after the previous step, remove the middle speaker of the block of three adjacent output speakers — 1013 |

| |
|---|
| Initialize VBAP gains with the remaining output speakers — 1015 |

EP 3 777 242 B1

Figure 11

| Obtain input speaker layout | ~ 1101 |

↓

| Obtain output speaker layout | 1103 |

↓

| Create VBAP triangulation for the input layout | 1105 |

↓

| Create VBAP triangulation for the output layout using a modified scheme | 1107 |

↓

| Continue removal of excess triangles having crossing edges | 1109 |

↓

| Go through all triangles in the output layout and check if any output layout triangle is completely inside an input layout triangle | 1111 |

↓

| Use the remaining triangles to initialize VBAP gains | 1113 |

Figure 12

1400

1405

UI

1409

Input /Output port

CPU

1407

MEM

1411

EP 3 777 242 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014226823

**Non-patent literature cited in the description**

- Application of directional audio coding in audio. *19th International Congress on Acoustics,* 02 September 2007